# EUROPEAN PATENT SPECIFICATION

(11) **EP 4 261 498 B1**
(45) Date of publication and mention of the grant of the patent: **20.08.2025**
(21) Application number: 23167909.3
(22) Date of filing: 14.04.2023
(51) Int. Cl.: G01B 11/275

(54) **CLAMP APPLICABLE TO A WHEEL TYRE AND METHOD FOR APPLYING A CLAMP**
AUF EINEN RADREIFEN ANWENDBARE KLEMME UND VERFAHREN ZUM ANBRINGEN EINER KLEMME
DISPOSITIF DE SERRAGE APPLICABLE À UN PNEUMATIQUE DE ROUE ET PROCÉDÉ D'APPLICATION DU DISPOSITIF DE SERRAGE

(30) Priority: 15.04.2022 IT 202200007634
(43) Date of publication of application: 18.10.2023
(73) Proprietor: NEXION S.p.A., 42015 Correggio (RE) (IT)
(72) Inventor: CORGHI, Giulio, 42015 Correggio (IT)
(74) Representative: Conti, Marco

(56) References cited:
- DE-A1- 102016 217 287
- US-A1- 2014 070 474
- US-A1- 2018 347 974

## Description

This invention relates to a clamp which is applicable to a vehicle wheel tyre and which is widely used in the field of vehicle alignment systems.

This invention also relates to a method for applying a clamp to a vehicle wheel.

To date, clamps of many different kinds which are removably applicable to vehicle tyres are known. These clamps are configured with a central pin to support measuring devices or targets for adjusting vehicle alignment and/or for calibrating the vehicle's sensors such as, for example, ADAS sensors. In this situation, while taking a measurement or performing calibration, the clamp is fixed securely to the vehicle wheel in such a way that the measuring device and/or the calibration target preferably occupy a central position relative to the wheel.

Prior art clamps comprise a body provided with a central portion from which a plurality of arms extend.

Normally, the plurality of arms comprises three arms that are angularly spaced at approximately 120° from each other. Slidably mounted on each arm there is a slider that is configured to engage the tyre tread with a gripping portion so as to apply the clamp to the tyre.

Each slider is operatively connected, for example, by means of connecting levers, cables and the like, to a plurality of toothed elements which can be driven in rotation, for example, by means of a handle in such a way that a rotational movement of the toothed elements corresponds to a sliding movement of the sliders along the arms.

More in detail, the sliders can be moved between a closed position, where they are juxtaposed with the central portion so that the gripping portions are tightened on the tyre (or alternatively on the wheel rim) and the clamp is applied to the tyre as one therewith, and an open position, where the sliders are away from the central portion of the clamp so that the clamp can be fitted to/removed from the tyre.

In other words, by moving the handle, the toothed elements are set in rotation and the kinematic chain they form part of causes the sliders to move as well, so that the clamp can be fitted to/removed from the tyre.

Examples of these clamps are described in WO2014039053A1, WO2017093922A1, WO2018046222 and DE102016217287A1.

As is known, each slider of the clamp is provided with a gripping portion configured to abut the tyre tread (or, alternatively, the wheel rim) so as to allow the clamp to be securely applied to the wheel.

As is known, the gripping portion of the sliders is usually a flat, rigid surface which may, if necessary, be knurled.

In use, when the sliders are moved from the open position to the closed position, the gripping portions are moved simultaneously into contact with the wheel so that the clamp is automatically self-centred relative to the wheel it is applied to.

Normally, to apply the clamp to the wheel, an operator juxtaposes the clamp with the wheel until a first slider, specifically the gripping portion thereof, abuts the top of the wheel and is substantially aligned vertically with the centre of the wheel.

In other words, the operator positions the first slider in such a way that the first slider is substantially aligned vertically with the centre of the wheel.

Since positioning is a manual operation, it is possible that the first slider, when it is rested on the wheel, may not be precisely aligned vertically with the centre of the wheel. In this situation, if the sliders are moved to the closed position, the clamp would not be correctly centred and oriented on the wheel.

Therefore, to prevent the clamp not being centred relative to the wheel, the operator, before moving the sliders to the closed position, must first move the clamp away from the wheel and then reposition it.

That is because the structure of the first slider, in particular, of its gripping portion, is such that the position of the clamp cannot be adjusted when the first slider is resting on the wheel.

More specifically, sliding the first slider on the wheel to compensate for the misalignment of the clamp is difficult and almost impossible because there is the risk of the gripping portion getting jammed or stuck in the gaps of the tyre tread.

In this situation, therefore, to correct its position, the clamp must first be moved away from the wheel and then positioned again.

That means the procedure of applying and positioning prior art clamps on the wheel is quite time-consuming.

Moreover, it subjects the clamp to greater wear and involves a higher risk of breaking the clamp if adjusting its position is attempted while the first slider is resting on the wheel.

US 2014/0070474 A1 discloses a clamp applicable to a tyre comprising a body including a plurality of arms, a plurality of sliders coupled to said arms and being radially movable between a retracted and an extracted position and an operating mechanism to allow simultaneous movement of the sliders.

The technical purpose of this invention, therefore, is to overcome the above mentioned disadvantages of the prior art by providing a clamp which is applicable to a wheel tyre and a method for applying the clamp.

The aim of this invention, therefore, is to provide a clamp which can be positioned on the wheel precisely without the sliders getting jammed or stuck on the wheel, specifically on the tyre.

A further aim of this invention, therefore, is to provide a clamp that is convenient, handy and easy to apply to the wheel.

A further aim of this invention is to provide a clamp that is quick to fit, adjust and remove from the vehicle wheel.

A further aim of this invention is to provide a simple and reliable method for applying the clamp.

The technical purpose indicated and the aims specified are substantially achieved by a clamp which is applicable to a wheel tyre and a method for applying the clamp comprising the technical features described in one or more of the accompanying claims. The dependent claims correspond to possible embodiments of the invention.

More specifically, the technical purpose indicated and the aims specified are achieved by a clamp which is applicable to a vehicle wheel tyre and which comprises a body including a plurality of arms extending radially from a central axis and angularly distributed around the central axis.

According to an aspect of this disclosure, the body comprises a central portion of substantially circular shape from which the arms extend. In this situation, the central portion and the arms define a substantially star-like shape. In a preferred embodiment, the arms have the same length.

In a preferred embodiment, there are three arms: an upper arm and two lateral arms.

The upper arm is elongated along an upper axis oriented radially relative to the central axis.

The upper arm is operatively configured to position a slider, which is slidably associated with it, in contact with the top of a wheel tyre, as described below.

The lateral arms, on the other hand, are elongated along respective lateral axes which are oriented radially relative to the central axis.

The lateral arms are operatively configured to position respective sliders, which are slidably associated with them, in contact with zones of the tyre which are positioned at a level below the axis of the wheel.

More specifically, the lateral arms are operatively configured to position the respective sliders in contact with zones of the tyre which are positioned at a lower level, that is to say, at a height from the ground below the level at which the axis of the wheel is located.

In a preferred embodiment, the angles made by the lateral arms with the upper arm are the same size.

In a preferred embodiment, each lateral axis is angularly spaced from the upper axis by an angle greater than 90°.

More specifically, the angle subtended between the upper axis and each of the lateral axes is preferably included in the range from 95° to 110°. Still more preferably, this angle is 100°.

In a preferred embodiment, the lateral axes are angularly spaced from each other by an angle greater than 120°.

In a preferred embodiment, the angle made between the lateral axes is 160°.

According to an aspect of this disclosure, the clamp also comprises a supporting element - for example, a pin - extending away from the body along the central axis. This supporting element is configured to reversibly engage a measuring device, a calibration target or similar accessories useful for vehicle wheel alignment and/or for calibrating vehicle sensors.

According to an aspect of this disclosure, the clamp also comprises a slider system comprising a plurality of sliders.

Each slider is slidably coupled to a respective arm to move radially between a retracted position and an extracted position.

More in detail, at the retracted position, each slider is at a first distance from the central axis and at the extracted position, it is at a second distance from the central axis, greater than the first distance.

According to an aspect of the disclosure, the sliders are coupled to the respective arms and are movable in such a way as to converge in synchronized manner towards the central axis so as to define a self-centring slider system. In other terms, the self-centring slider system ensures that all the sliders are the same distance from the central axis at both the retracted and the extracted positions.

The sliders are configured to engage the wheel tyre to allow the clamp to be firmly and securely applied to the tyre.

Each slider includes a side abutment portion extending parallel with the central axis and configured to abut against the tyre tread so as to hold the clamp on the tyre.

The side abutment portion defines a first part of the slider and extends perpendicularly to the plane defined by the clamp body on the side opposite the supporting element.

According to a further aspect of this disclosure, each slider also comprises a front abutment portion extending parallel with a respective arm and configured to abut against a sidewall of the tyre.

The front abutment portion defines a second part of the slider and extends parallel with the arm on which the slider is mounted, so that when the clamp is applied to the tyre, the front abutment surface is interposed between the sidewall of the tyre and the respective arm and creates a space that helps to prevent contact between the arm and the wheel rim.

Thus, the sliders are each defined by a first and a second part making, between them, a right angle, which makes the slider substantially L-shaped.

According to an aspect of this disclosure, each slider also comprises an engagement portion configured to engage the arm so that the slider can slide along the respective arm.

In an embodiment, the first and the second portion are made in one piece with the engagement portion. In other words, the first and the second portion constitute a single body.

According to an aspect of this disclosure, the plurality of sliders includes an upper slider that is slidable along the upper arm. The front abutment portion of the upper slider is elongated along the upper axis oriented radially relative to the central axis.

More specifically, the front abutment portion of the upper slider extends parallel with the upper arm.

The plurality of sliders also includes a pair of lateral sliders that are slidable along the respective lateral arms.

More specifically, the front abutment portion of each lateral slider extends along the respective lateral axis oriented radially relative to the central axis.

More specifically, the front abutment portion of each lateral slider extends parallel with the respective lateral arm.

In a preferred embodiment, the lateral sliders are equidistant from the central axis so as to facilitate positioning the central axis so it is aligned with the axis of the wheel, as described in detail below.

According to an aspect of this disclosure, the clamp also comprises an operating mechanism configured to allow simultaneously moving the sliders from the retracted position to the extracted position and vice versa. More in detail, the operating mechanism comprises an operating means that is rotatably connected to the body to rotate about the central axis.

In a possible embodiment (the one illustrated), the operating means is rotatably connected to the body to rotate about the central axis so that a rotation of the operating means in a first direction corresponds to a movement of the sliders towards the retracted position and a rotation of the operating means in a second direction, opposite of the first direction, corresponds to a movement of the sliders towards the extracted position.

Alternatively, the operating means might be movable in translation (or according to another predetermined trajectory, for example, roto-translation) so that a translation (or more generally speaking, any movement) of the operating means in a first direction corresponds to a movement of the sliders towards the retracted position and a translation (or more generally speaking, any movement) of the operating means in a second direction, opposite of the first direction, corresponds to a movement of the sliders towards the extracted position.

In a possible embodiment (illustrated), the operating means is embodied as a disc with a circular cross section centred on the central axis; in this case, moving the operating means comprises rotating the disc.

Alternatively, the operating means may have any shape.

The operating mechanism also comprises a plurality of connecting levers. Each connecting lever has a first end that is articulated to the operating means, and a second end that is articulated to a corresponding slider of the plurality of sliders to allow the sliders to be moved simultaneously from the retracted position to the extracted position and vice versa.

In the preferred embodiment, the connecting levers are made in the form of rigid rods, for example, conrods, preferably metallic.

The operating mechanism also comprises a gripping portion grippable by a user and associated with the operating means to slidably move the sliders. The gripping portion is connected to the operating means alternatively directly or indirectly, for example, by a kinematic coupling including gears or cables.

If the gripping portion is connected to the operating means by a direct connection, a movement of the gripping portion corresponds directly to movement of the operating means and sliding of the sliders. The gripping portion of the clamp of this disclosure might be connected to the operating means by a direct connection as described in IT202100015209.

If the gripping portion is connected to the operating means by an indirect connection, a movement of the gripping portion corresponds to a movement of a system of toothed wheels or ring nuts responsible for driving the operating means in such a way as to displace the sliders. For example, the gripping portion of the clamp of this disclosure might be connected to the operating means by an indirect connection as described in WO2014039053A1, WO2017093922A1 and WO2018046222.

In the embodiment illustrated, the gripping portion is connected to the operating means by a direct connection.

More specifically, the gripping portion is disposed eccentrically relative to the central axis.

In other words, the gripping portion is spaced from the central axis (hence, relative to the central axis, it is at a non-zero radial distance which constitutes a lever arm for a force that generates an angular momentum on the clamp body).

In a possible example embodiment, the gripping portion has the shape of a bar. Alternatively, the gripping portion might have the shape of a knob or other shape which is convenient for the user to grip with a hand.

In the embodiment illustrated, the gripping portion comprises a rod having a first end that is connected to the operating means to be integral therewith and a second end that extends radially relative to the central axis. The second end may comprise a portion that is covered with a non-slip material (rubber, for example) to make it easier for the operator to grip it.

According to an aspect of this disclosure, the gripping portion is made in one piece with the operating means. More specifically, the gripping portion is an extension of the operating means and is suitably contoured to allow an operator to grip it.

According to an aspect of this disclosure, the clamp also comprises a handgrip connected to the clamp body and positioned in a plane containing one of the arms and the central axis.

In a possible embodiment (the one illustrated), the handgrip is connected to the upper arm. More specifically, the handgrip is cantilevered to the clamp arm so it can be easily gripped by the user.

In use, to position the clamp on the wheel, the user holds the handgrip with one hand and moves the clamp close to the tyre so that the central axis lies close to the axis of rotation of the wheel. In this situation, the clamp is juxtaposed with the tyre until the front abutment portion of each slider is in contact with the sidewall of the tyre and until the side abutment portion of the slider abuts the tyre tread.

Next, while still holding the handgrip with one hand, the user grips the gripping portion with the other hand so as to be able to move the operating means. In this situation, the user moves the operating means, for example, rotates it, so as to bring the sliders close to the tyre. In other terms, the user moves the gripping portion closer to the handgrip so that the sliders of the clamp are brought simultaneously to the retracted position.

Once the sliders have been brought into contact with the tyre, the side abutment portion of each applies a gripping pressure on the tyre tread so as to hold the clamp on the wheel.

To prevent this pressure from slackening on account of the elastic return of the tyre tread or in any case to ensure a correct hold, the clamp comprises a locking device that is movable between a locked position, where it acts on the operating mechanism to prevent it from moving the sliders, and an unlocked position, where it allows the sliders to be moved. In a possible embodiment, the locking device comprises a braking element which, at the locked position, is configured to apply a locking pressure on the operating means by means of a vice connected to the clamp body.

To switch the locking device from the locked to the unlocked position and vice versa, the clamp comprises an actuating mechanism connected to the locking device and operable by the user.

This mechanism may comprise levers, keys, pushbuttons and any other actuating element.

In the preferred embodiment, the actuating mechanism comprises a lever made on the handgrip so that, when the sliders have moved into contact with the tyre, a user with a hand operatively holding the handgrip can operate the locking device to prevent the sliders from slipping towards the extracted position.

Alternatively, the actuating mechanism may be made on the gripping portion (or in proximity thereto).

In use, therefore, to move the sliders simultaneously from the extracted position to the retracted position in contact with the tyre tread, the locking device is released by means of the actuating mechanism so as to allow the operating mechanism, specifically the operating means, to move and cause the sliders to slide. Once the sliders have reached the retracted position, the actuating mechanism is activated so that the locking device acts on the operating means in order to stop it from moving, thus preventing the sliders from moving towards the retracted position.

In order to ensure the alignment of the vehicle is correct and precisely adjusted and/or to ensure its sensors are correctly calibrated, the clamp should be correctly centred relative to the wheel it is applied to and be suitably oriented.

Therefore, to make positioning the clamp on the wheel easier, quicker and more precise, the clamp comprises a rolling support system which is configured to come into direct contact with the tyre and which is rotatable idly about an axis of rotation.

More specifically, the plurality of sliders comprises a rolling support system which comes into contact with the wheel the moment the clamp is applied to the wheel and which, thanks to its rolling motion along the tyre, allows adjusting the position of the clamp.

The term "rolling support system" may be used to denote a plurality of rolling elements located at different points of the clamp. More specifically, each slider is provided with at least one rolling element, as described in detail below, strategically positioned so that, when the clamp is juxtaposed with the wheel, it comes into abutment against the tyre and rolls along the tyre to vary the position of the clamp on the wheel without having to move it away from the wheel.

According to an aspect of the disclosure, the rolling support system includes at least a first rolling element forming part of the upper slider and rotating idly about an axis parallel with the central axis or with the upper axis.

In a possible embodiment (the one illustrated), the rolling support system includes, besides the first rolling element, a further rolling element forming part of the upper slider.

The first rolling element and the further rolling element rotate idly about axes that are perpendicular to each other. In the preferred embodiment, the first rolling element rotates about the upper axis of rotation, while the further rolling element rotates about the upper axis.

Besides the at least one first rolling element, the support system may also include at least a second rolling element forming part of at least one of the lateral sliders and rotating idly about an axis that is transverse, preferably orthogonal, to the lateral axis of the lateral arm of the at least one lateral slider.

In a possible embodiment, each lateral slider includes at least one rolling element that rotates idly about the axis that is transverse, preferably orthogonal, to the lateral axis of the respective lateral arm.

In the preferred embodiment, each lateral slider comprises a plurality of rolling elements whose axes of rotation are parallel with each other and orthogonal to the lateral axis of the respective lateral arm.

In use, therefore, when the clamp is applied to the wheel, the sliders are brought to the extracted position and the clamp is juxtaposed with the wheel.

More specifically, the clamp comes into abutment against the tyre at the points where the rolling elements are located so that if the position of the clamp needs to be adjusted, all that has to be done is to move the clamp (for example, by rotation or translation) while keeping it in contact with the tyre, so as to cause the rolling elements to rotate and thereby correcting clamp misalignment.

Advantageously, the rolling elements make positioning the clamp on the wheel quick and easy, without having to remove the clamp from the wheel completely if it has to be repositioned.

With reference to the embodiment illustrated, the rolling support system comprises an adjustment tube adapted to come into contact with the tyre tread.

The adjustment tube is rotatably associated with the side abutment portion of the upper slider to rotate about the upper axis of rotation parallel with the central axis.

More specifically, the side abutment portion of the upper slider is elongated along the upper axis of rotation and the adjustment tube is fitted round an end stretch (opposite the stretch that joins the side abutment portion to the front abutment portion of the upper slider) of the side abutment portion.

According to an aspect of this disclosure, the adjustment tube has rotational symmetry.

More specifically, the adjustment tube is made in the form of a hollow cylinder that can be fitted round the side abutment portion of the upper slider of the clamp so as to rotate relative thereto.

The adjustment tube also comprises an outside surface provided with a plurality of mutually spaced annular protrusions coaxial with the upper axis of rotation.

In a possible embodiment, the annular protrusions have a saw-toothed profile whose tooth set is oriented towards the central axis of the clamp.

Alternatively, the annular protrusions have a substantially stepped profile.

According to an aspect of this disclosure, the rolling support system might also comprise an adjustment roller adapted to come into abutment against the sidewall of the tyre.

The adjustment roller is rotatably coupled to the front adjustment portion of the upper slider to rotate about an axis of rotation parallel with the upper axis.

More specifically, the adjustment roller sits in a housing formed in the front abutment portion of the upper slider in such a way as to rotate idly.

In the preferred embodiment, the adjustment roller has an elongated shape and a smooth outside surface so the adjustment roller can easily roll on the sidewall of the tyre, that is to say, making it easy to adjust the position of the clamp on the wheel.

According to another aspect of the disclosure, the rolling support system also comprises, for each lateral slider of the pair of lateral sliders, one or more rolling elements configured to come into contact with the sidewall of the tyre.

The rolling elements are mounted on the front abutment portion of the respective lateral slider and rotate, specifically idly, about axes which are oriented transversely, preferably orthogonally, to the lateral axis of the respective lateral arm.

In a possible embodiment (illustrated), each lateral slider comprises a plurality of rolling elements.

The rolling elements of the plurality rotate about axes which are oriented orthogonally to the lateral axis of the respective lateral arm and which are parallel with the upper axis of the upper arm.

In a preferred embodiment, the maximum distance between the surfaces of the rolling elements of the plurality and the clamp body is equal to the maximum distance between the surface of the adjustment roller and the clamp body.

In use, to position the clamp on the wheel, the sliders are brought to the extracted position and the user, with one hand on the handgrip and the other on the gripping portion, orients the clamp in such a way that the upper arm is substantially perpendicular to the ground.

Next, with the clamp positioned in this way, the user places the clamp in contact with the tyre in such a way that the central axis is approximately aligned with the axis of rotation of the wheel and the upper slider abuts a zone at the top of the tyre tread.

In this situation, the upper slider has its side abutment portion abutting the tyre tread and its front abutment portion resting against the sidewall of the tyre, while the lateral sliders have their respective side abutment portions spaced from the tyre tread and their front abutment portions abutting the sidewall of the tyre.

In this situation, the clamp is in contact with the wheel tyre at the points where the rolling elements of the rolling support system on the clamp have been placed.

In effect, looking in more detail, the clamp abuts the tyre with the side and front abutment portions of the upper slider, where the adjustment tube and the adjustment roller are located, respectively, and with the front and side abutment portions of the lateral sliders, where the rolling elements are located.

In this situation, if the position of the clamp on the wheel needs to be adjusted, the user can keep the upper slider in contact with the tyre and the front abutment portions of the lateral sliders in contact with the sidewall of the tyre and, by letting the rolling elements roll, can suitably orient the clamp to adjust its position relative to the wheel.

More in detail, a first type of adjustment might be necessary when the clamp is juxtaposed with the wheel in such a way that the central axis is substantially coincident (aligned) with the axis of rotation of the wheel but the upper slider is not vertically aligned with the centre of the wheel (that is to say, the upper arm is not at least substantially perpendicular to the ground).

In this situation, while keeping the clamp (that is to say, the front abutment portions of the lateral sliders and the upper slider) in contact with the tyre, the user lets the adjustment tube roll along the tyre tread, specifically along the top portion of it, causing the clamp to rotate about the central axis. While the adjustment tube rotates about the upper axis of rotation in contact with the tyre tread, the adjustment roller and the rolling elements roll on the sidewall of the tyre to prevent the front abutment portions of the sliders from rubbing against the sidewall of the tyre and causing unwanted jamming and scraping.

By making the adjustment tube roll along the tyre tread, the clamp keeps the central axis substantially aligned with the axis of rotation of the wheel and the upper slider is brought into vertical alignment with the centre of the wheel (that is, the upper arm is adjusted so it is perpendicular to the ground), thus ensuring that the clamp is applied correctly.

A second type of adjustment might be necessary when the clamp is juxtaposed with the wheel in such a way that the upper slider is substantially aligned vertically with the centre of the wheel but the central axis of the clamp is not aligned with the axis of rotation of the wheel, that is to say, the central axis and the axis of rotation of the wheel are offset from each other.

In this situation, a useful feature is the fact that the adjustment tube is rotatably connected to the side abutment portion of the upper slider. More in detail, the user keeps the clamp in contact with the tyre and lets the clamp swivel about the adjustment tube so as to bring the central axis into alignment with the axis of rotation of the wheel.

During the swivelling motion of the clamp, the adjustment roller and the rolling elements roll on the sidewall of the tyre so that the clamp can be positioned on the wheel in such a way that its central axis is aligned with the axis of rotation of the wheel.

A third type of adjustment might be necessary when the wheel the clamp is applied to is particularly large in diameter. More specifically, in such a situation, the clamp might be juxtaposed with the wheel so that the central axis is parallel with (and at the same height from the ground as) the axis of the wheel and the upper arm is perpendicular to the ground but without the upper slider being positioned on the top of the tyre tread (that is to say, without the slider being vertically aligned with the centre of the wheel). In such a situation, the clamp should be "translated" relative to the centre of the wheel.

To avoid this risk, by lifting the adjustment tube slightly off the tyre tread and keeping the adjustment roller and the rolling elements in contact with the sidewall of the tyre, the clamp can be translated in such a way that the central axis coincides with the axis of the wheel and the upper slider is on the top of the tyre tread and vertically aligned with the centre of the wheel. Following adjustment of the clamp's position on the wheel, the operating mechanism is actuated to move the sliders simultaneously to the retracted position. In this situation, the gripping portion is moved so the operating means is moved and the lateral sliders are also brought simultaneously into contact with the tyre. By so doing, the clamp is automatically centred on the wheel and the sliders apply on the tyre the gripping pressure needed to keep the clamp mounted on the wheel.

In this situation, the locking device is moved from the unlocked position to the locked position so as to stop the sliders from unwantedly slipping towards the extracted position.

When the clamp is no longer needed on the wheel, the locking device is moved from the locked position to the unlocked position so as to allow moving the sliders towards the extracted position, hence slackening the clamp from the tyre.

Also an object of this disclosure is a method for applying a clamp to a vehicle wheel. The method comprises a step of preparing a clamp comprising a body including a plurality of arms disposed radially around a central axis.

In the preferred embodiment, the plurality of arms comprises an upper arm elongated along an upper axis and oriented radially relative to the central axis. The plurality of arms also comprises two lateral arms elongated along respective lateral axes oriented radially relative to the central axis and angularly spaced from the upper axis by more than 90°.

According to an aspect of this disclosure, the angles made by the upper arm with each of the lateral arms are the same size.

The clamp also comprises a plurality of sliders slidably coupled to the arms to move radially between a retracted position, where they are proximal to the central axis, and an extracted position, where they are distal to the central axis. In a preferred embodiment, the retracted position and the extracted position are the same for each slider of the plurality of sliders.

In a preferred embodiment, the plurality of sliders comprises an upper slider which is slidable along the upper arm, and at least one pair of lateral sliders which are angularly spaced around the central axis relative to the upper slider and which are slidable along the lateral arms.

Each slider comprises a side abutment portion, extending parallel with the central axis and configured to abut the tyre tread, and a front abutment portion extending parallel with a respective arm and configured to abut the sidewall of the tyre.

The clamp also comprises an operating mechanism configured to allow simultaneously moving the sliders from the retracted position to the extracted position and vice versa.

More specifically, the operating mechanism is configured to move the sliders in such a way that they converge towards the central axis in synchronized manner, thus defining a self-centring slider system.

The clamp also comprises a rolling support system included in the plurality of sliders and configured to come into direct contact with the tyre, as described below.

After the step of preparing, the method comprises a step of actuating the operating mechanism to move the sliders simultaneously towards the extracted position.

The method then comprises a step of juxtaposing the clamp with the vehicle wheel until the sliders surround the tyre tread.

In the preferred embodiment, during the step of juxtaposing, the clamp is moved close to the wheel so that the upper slider is positioned in such a way that its side abutment portion abuts a zone at the top of the tyre tread. In other words, the upper slider is in contact with the tyre tread while the other sliders, that is, the lateral sliders, are spaced from the tyre tread.

Looking in more detail, when the clamp is juxtaposed with the wheel, the front abutment portions of all the sliders are in contact with the sidewall of the tyre, whilst only the side abutment portion of the upper slider is in contact with the tyre tread. In effect, the side abutment portions of the lateral sliders are distal to the tyre tread.

After the step of juxtaposing, the method further comprises a step of adjusting the position of the clamp on the wheel by rotating the clamp so as to cause at least part of the rolling support to rotate.

More in detail, the step of adjusting comprises moving the clamp into contact with the wheel in such a way that the rolling support rolls on the tyre to bring the clamp to the right position relative to the wheel.

More specifically, before the sliders are brought to the retracted position, it is best for the clamp to be disposed with the upper arm perpendicular to the ground and the upper slider aligned vertically with the centre of the wheel.

In the preferred embodiment, each slider is provided with at least one rolling element of the rolling support system.

In the preferred embodiment, the at least one rolling element of each slider is positioned on the slider itself in the abutment portions which, during the step of juxtaposing (that is, when the sliders are still at the extracted position), come into contact with the tyre so as to be able to roll on the tyre to allow adjusting the position of the clamp.

More in detail, since the clamp is juxtaposed with the wheel by placing the upper slider in abutment against the tyre, the upper slider has at least one rolling element disposed on its side abutment portion and at least one rolling element disposed on its front abutment portion.

The lateral sliders, on the other hand, when the clamp is juxtaposed with the wheel, each come into contact with the sidewall of the tyre with its front abutment portion, which is thus provided with at least one rolling element, as described below.

Once the clamp has been juxtaposed with the wheel, it is in contact with the wheel by means of the rolling elements which, if necessary, can be made to roll on the tyre to adjust the position of the clamp without moving it away from the wheel.

In a possible embodiment, the rolling support comprises at least one between an adjustment tube and an adjustment roller.

In the preferred embodiment, the upper slider has both the adjustment roller and the adjustment tube.

The adjustment tube is rotatably coupled to the side abutment portion of the upper slider while the adjustment roller is rotatably coupled to the front abutment portion of the upper slider.

More in detail, in the case where the upper slider is provided with the adjustment tube, the latter is in contact with the zone at the top of the tyre and rolls on the tyre tread to facilitate rotation of the clamp about the central axis.

In the case where the upper slider is provided also, or alternatively, with the adjustment roller, the latter is in contact with the zone at the top of the tyre on the sidewall of the tyre and rolls about an axis of rotation parallel with the upper arm along the sidewall of the tyre to facilitate rotation of the clamp about the central axis.

In the step of rolling, the adjustment tube and/or the adjustment roller roll on the tyre tread or on the sidewall of the tyre, respectively, so as to adjust the position of the clamp relative to the wheel, that is to say, so as to make the upper arm perpendicular to the ground, align the upper slider vertically with the centre of the wheel and make the central axis coincide with the axis of the wheel.

In other words, adjusting the position of the clamp on the wheel is accomplished by rolling the adjustment tube and/or the adjustment roller on the tyre in such a way as to cause the clamp to rotate or swivel around the upper slider.

In a preferred embodiment, the rolling support system comprises a plurality of rolling elements rotatably coupled to the lateral sliders. More specifically, the rolling elements are coupled to the front abutment portions of the lateral sliders.

By rolling along the sidewall of the tyre, the rolling elements contribute to adjusting the clamp on the wheel and prevent the lateral sliders from scraping when they are brought to the retracted position.

After the step of adjusting, the method further comprises a step of actuating the operating mechanism to move the sliders simultaneously towards the retracted position and a simultaneous step of rolling the rolling support system on an outside surface of the tyre. In this situation, the lateral sliders move towards the wheel (causing the rolling elements to roll) until they come into abutment against the tyre tread under the action of the operating mechanism.

In this situation, the locking mechanism is activated and the clamp is securely applied to the wheel.

Advantageously, the fact that the clamp is abutted against the wheel by means of the rolling support system allows adjusting the clamp on the wheel without having to move it away from the wheel and towards it again repeatedly and without the sliders scraping the tyre.

Further features and advantages of this invention are more apparent in the exemplary, hence non-limiting, description of an embodiment of a clamp which is applicable to a vehicle wheel tyre and a method for applying a clamp to a vehicle wheel.

The description is set out below with reference to the accompanying drawings which are provided solely for purposes of illustration without limiting the scope of the invention and in which:

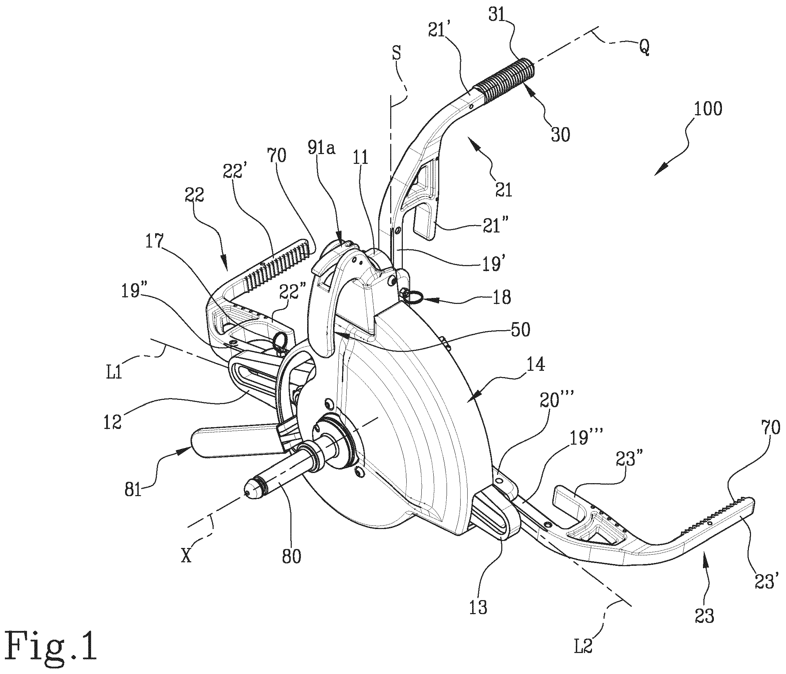

- Figure 1 shows a front perspective view of a clamp according to this disclosure;
- Figures 2A and 2B show perspective views of a clamp according to this disclosure in two different configurations;
- Figure 3 shows a perspective view of a clamp according to this disclosure, mounted on a tyre;
- Figures 4A-4C show front views of a clamp according to this disclosure, mounted on a tyre in different positions.

With reference to the accompanying drawings, the numeral 100 denotes a clamp which is applicable to a tyre P of a vehicle wheel R.

The clamp 100 comprises a body 10 including a plurality of arms 11, 12, 13 extending radially from a central axis X and angularly distributed around the central axis X.

According to an aspect of this disclosure, the clamp body 10 is shaped like a plate and has a front face 10a and a rear face 10b which, when the clamp 100 is mounted on the wheel R, faces towards the wheel R itself.

In a possible embodiment, the clamp body 10 also comprises a central portion which has a substantially circular cross section and from which the arms 11, 12, 13 extend to give the clamp body 10 a substantially star shaped structure.

In a possible embodiment, the clamp 100 comprises three arms 11, 12, 13 which are angularly spaced from each other.

In a preferred embodiment, the three arms 11, 12, 13 are the same length. More specifically, the clamp 100 has an upper arm 11 and two lateral arms 12, 13.

As shown in the accompanying drawings, the upper arm 11 is operatively configured to position a slider 21, slidably associated therewith, in contact with a top of the tyre P.

More specifically, the upper arm 11 is elongated along an upper axis S oriented radially relative to the central axis X.

The lateral arms 12, 13, on the other hand, are operatively configured to position respective sliders 22, 23, which are slidably associated with them, in contact with zones of the tyre which are positioned at a level below the axis of the wheel R.

More specifically, the lateral arms 12, 13 are operatively configured to position the respective sliders 22, 23 in contact with zones of the tyre P which are positioned at a lower level, that is to say, at a height from the ground below the level at which the axis (or the centre) of the wheel R is located from the ground.

Each lateral arm 12, 13 is elongated along a respective lateral axis L1, L2 oriented radially relative to the central axis X.

In a preferred embodiment, each lateral axis L1, L2 is angularly spaced from the upper axis S by an angle greater than 90°. In a preferred embodiment, the angles between the upper axis S and the two lateral axes L1, L2, respectively, are the same.

In the embodiment, illustrated, the angle between the upper axis S and each of the lateral axes L1, L2 is 100°.

In a preferred embodiment, the lateral axes L1, L2 are angularly spaced from each other by an angle greater than 120°.

In the embodiment, illustrated, the angle between the lateral axes L1, L2 is 160°.

In an embodiment, the body 10 also comprises a protective shell 14 configured to protect the clamp 100 against impurities, dust, extraneous bodies and the like in order to keep it working correctly.

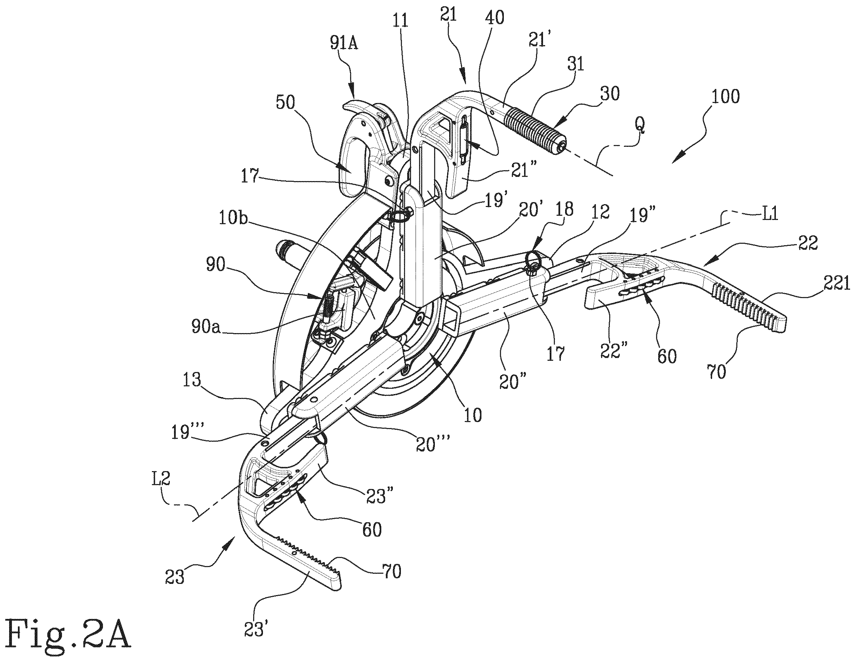

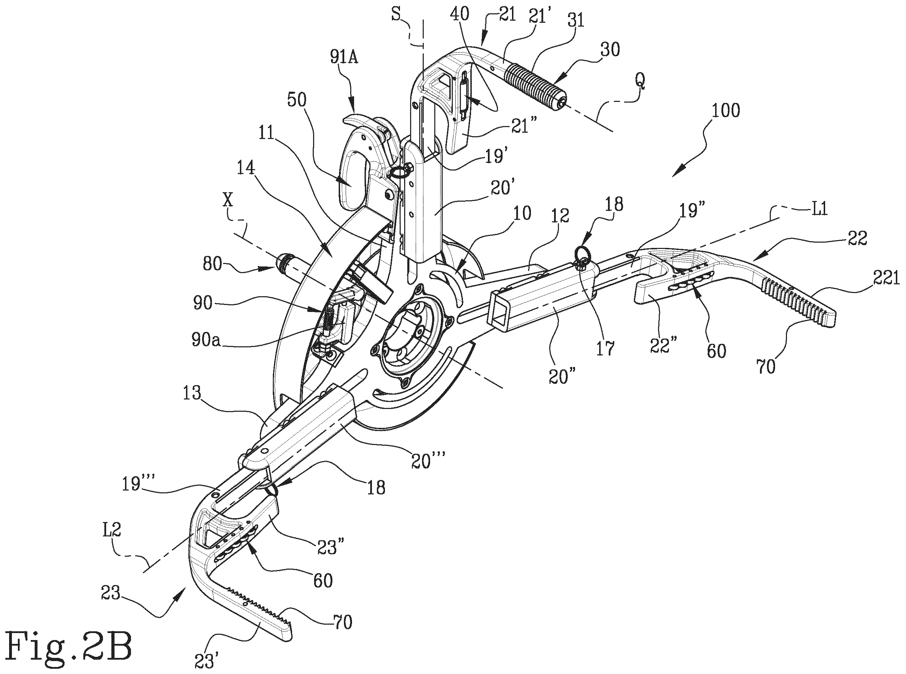

The clamp 100 also comprises a plurality of sliders 21, 22, 23, each slidably coupled to a respective arm 11, 12, 13 to move radially between a retracted position, where each slider 21, 22, 23 is at a first distance from the central axis X (Figure 2A), and an extracted position, where it is at a second distance from the central axis X (Figure 2B), greater than the first distance.

The sliders 21, 22, 23 are steplessly slidable along the respective arm 11, 12, 13 and may adopt any position intermediate between the extracted position and the retracted position. The sliders 21, 22, 23 are slidable along the respective arms 11, 12, 13 simultaneously so that they are all at the same radial distance from the central axis X thanks to the action of an operating mechanism, as described below.

According to an aspect of this disclosure, each arm 11, 12, 13 comprises a groove running along the direction of extension of the arm 11, 12, 13 and configured to guide the sliding movement of the respective slider 21, 22, 23 from the extracted position to the retracted position or vice versa.

To facilitate sliding each slider 21, 22, 23 along the respective groove, the part of the slider 21, 22, 23 that is slidably engaged in the groove is made from a low-friction material.

As shown in the accompanying drawings, each slider 21, 22, 23 comprises an engagement portion 20', 20", 20‴ which slidably engages the respective arm 11, 12, 13 so as to allow the aforesaid sliding movement from the extracted position to the retracted position and vice versa.

As shown in the accompanying drawings, each slider 21, 22, 23 also includes a side abutment portion 21', 22', 23' configured to abut against, and apply a gripping pressure on, the tread B of the tyre P so as to hold the clamp 100 on the tyre P.

The side abutment portion 21', 22', 23' defines a first part of the slider 21, 22, 23 extending perpendicularly to the rear face 10b on the side of the rear face 10b of the body 10.

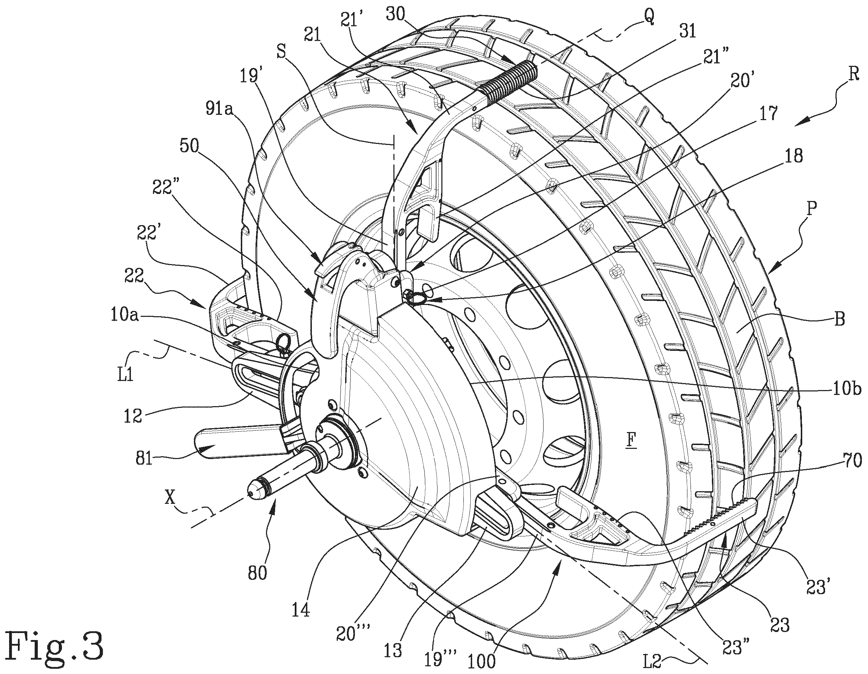

According to a further aspect of this disclosure, each slider 21, 22, 23 also comprises a front abutment portion 21", 22", 23" configured to abut against a sidewall of the tyre P when the clamp 100 is applied to the tyre P (Figure 3).

The front abutment portion 21", 22", 23" defines a second part of the slider 21, 22, 23 and extends parallel with the arm 11, 12, 13 on which the slider 21, 22, 23 is slidably mounted. In this situation, each slider 21, 22, 23 is substantially in the shape of an L, where the side abutment portion 21', 22', 23' and the front abutment portion 21", 22", 23"are substantially at right angles to each other. In an embodiment, the front abutment portion 21", 22", 23" has a first portion, located in proximity to the side abutment portion 21', 22', 23' parallel with the rear face of the body 10, and a second portion that is slightly inclined towards the body 10. This makes it easier for the sliders 21, 22, 23 to be correctly positioned relative to the sidewall F of the tyre P.

According to an aspect of this disclosure, each slider 21, 22, 23 also comprises an auxiliary portion 19 extending parallel with the front abutment portion 21", 22", 23" and slidably insertable into a cavity made in the engagement portion 20', 20", 20‴ at a plurality of positions so the front abutment portion 21', 22', 23' can extend radially by a quantity greater than the extension which the groove of the arm 11, 12, 13 allows the slider 21, 22, 23.

In effect, in use, thanks to the different relative positions between the auxiliary portion 19', 19", 19‴ and the engagement portion 20', 20", 20"', the distance between the central axis X and the side abutment portions 21', 22', 23' when these are at the respective extracted positions is greater than the radius of the wheel R. In other terms, the sliders 21, 22, 23 are adapted to be wrapped around the wheel R on the tread B of the tyre P.

According to an aspect of this disclosure, the auxiliary portion 19', 19", 19‴can be retracted into and extracted from the cavity of the engagement portion 20', 20", 20‴ to occupy a plurality of positions intermediate between a least extracted position and a most extracted position so as to adapt the clamp 100 to the diameter of the tyre P it is being applied to.

The expression "intermediate positions" is used to mean discrete positions, identical for each auxiliary portion 19', 19", 19"', relative to the corresponding engagement portion 20', 20", 20‴ so that with the engagement portions 20, 20", 20‴ all at the same distance from the central axis X, the side abutment portions 21', 22', 23' can be at different distances from the axis X.

For each slider 21, 22, 23, the clamp 100 also comprises a stop mechanism 18 (shown, for example, in Figure 2A) configured to stop the auxiliary portion 19 from sliding in the cavity once the auxiliary portion 19 has been extracted or retracted to adopt a desired intermediate position.

In a possible embodiment, the stop mechanism 18 consists of a succession of holes, made on the auxiliary portion 19, into which a pin or a rod 17 can be inserted through a hole in the engagement portion 20 in such a way as to stop the auxiliary portion 19 at the desired intermediate position.

In the preferred embodiment, the plurality of sliders 21, 22, 23 comprises an upper slider 21 that is slidable along the upper arm 11. The front abutment portion 21" of the upper slider 21 is elongated along the upper axis S oriented radially relative to the central axis X.

More specifically, the front abutment portion 21" of the upper slider 21 extends parallel with the upper arm 11.

The plurality of sliders 21, 22, 23 also includes a pair of lateral sliders 22, 23 that are slidable along the respective lateral arms 12, 13.

More specifically, the front abutment portion 22", 23" of the lateral sliders 22, 23 extends along the respective lateral axes L1, L2 oriented radially relative to the central axis X.

More specifically, the front abutment portion 22", 23" of the lateral sliders 22, 23 extends parallel with the respective lateral arms 12, 13.

In a preferred embodiment, the lateral sliders 22, 23 are equidistant from the central axis X so as to facilitate positioning the central axis X of the clamp 100 so it is aligned with the axis of the wheel R, as described in detail below.

According to an aspect of this disclosure, the side abutment portion 22', 23' of the lateral sliders 22, 23 is knurled (or corrugated) so it can firmly grip the tyre P.

More specifically, on their respective lateral abutment portions 22', 23', the lateral sliders 22, 23 are provided with knurling 70 that is configured to abut against the tread B of the tyre P.

As shown in the accompanying drawings, the knurling 70 has a substantially saw-toothed profile whose tooth set is oriented towards the body 10.

In use, when applying the clamp 100 to the tyre P, the sliders 21, 22, 23 are first made to slide towards the extracted position to allow the body 10 to be juxtaposed with the tyre P (Figure 2B).

Next, the sliders 21, 22, 23 are made to slide in such a way that the side abutment portion 21', 22', 23' is in contact with the tread B of the tyre P, while the front abutment portion 21", 22", 23" abuts the sidewall F of the tyre P and is interposed between the sidewall F and the respective arm 11, 12, 13 (Figure 3). In this situation, the front abutment portion 21", 22", 23" acts as a spacer which disposes the clamp 100 in a plane parallel with the wheel R so the arm 11, 12, 13 does not come into contact with the rim of the wheel R and thus prevents scraping and scratching the rim (Figure 3). The clamp 100 of this disclosure also comprises an operating mechanism configured to allow simultaneously moving the sliders 21, 22, 23 from the retracted position to the extracted position and vice versa.

More in detail, the operating mechanism comprises an operating means that is rotatably connected to the body 10 to rotate about the central axis X. The operating mechanism may be made according any of various technologies, based, for example, on gear trains, cables or other systems of essentially known type in the trade; in a (preferred) example, the operating mechanism comprises an operating means connected to the arms by a system of levers and movably connected to the body, and a handgrip attached to the operating means and grippable by a user to move the operating means directly. For a detailed description of the operating mechanism, reference is made to patent application IT 102021000015209 by the present Applicant.

According to an aspect of this disclosure, the operating means is mounted on the front face 10a of the clamp body 10 so that when the clamp 100 is applied to the tyre P, the operating means faces towards a user of the clamp 100.

According to an aspect of this disclosure, the operating means comprises a disc, preferably a metal disc, centred on the central axis X.

Alternatively, the operating means may be embodied in any form.

According to an aspect of this disclosure, the clamp 100 also comprises a supporting element 80, such as, for example, a pin or a hook, built into the clamp body 10 and configured to support a measuring target and/or a measuring device used for measuring the alignment of a vehicle once the clamp 100 has been applied to the vehicle tyre P.

The supporting element 80 extends away from the clamp body 10 along a direction transverse thereto, and, more specifically, it extends along the central axis X. More in detail, the supporting element 80 extends in such a way as to be directed towards the user when the clamp 100 is applied to the wheel R.

In an embodiment, the operating mechanism also comprises a plurality of connecting levers.

Each connecting lever has a first end that is articulated to the operating means, and a second end that is articulated to a corresponding slider 21, 22, 23 of the plurality of sliders to allow the sliders 21, 22, 23 to be moved simultaneously from the retracted position to the extracted position and vice versa.

In this situation, a displacement of the operating means, preferably a rotation of the operating means, corresponds to a displacement of the sliders 21, 22, 23 towards the retracted position and a further displacement of the operating means, opposite of the first, corresponds to a displacement of the sliders 21, 22, 23 towards the extracted position.

In other words, the connecting levers allow the sliders 21, 22, 23 associated with them to slide simultaneously along the respective arm 11, 12, 13 so they all simultaneously occupy the same radial position relative to the central axis X along the upper axis S and the lateral axes L1, L2 occupy the same radial position relative to the central axis X.

This aspect is advantageous because it allows self-centring the clamp 100 while it is being applied to the tyre P.

In a possible embodiment, the connecting levers are made in the form of rods or links, preferably made of metal.

To move the operating means, the operating mechanism also comprises a gripping portion 81 grippable by a user and associated with the operating means to slidably move the sliders 21, 22, 23.

The gripping portion 81 is connected to the operating means alternatively directly or indirectly, for example, by a kinematic coupling including gears or cables.

In the preferred embodiment, the gripping portion 81 is connected to the operating means directly so that a movement of the gripping portion corresponds directly to a displacement of the operating means and a sliding of the sliders 21, 22, 23.

In the embodiment shown in the accompanying drawings, the gripping portion 81 is disposed eccentrically relative to the central axis X.

In the embodiment shown in the accompanying drawings, the gripping portion 81 comprises a rod made in one piece with the operating means and extending away from it. Looking in more detail, the rod has a first end that is integrated in the operating means and a second end that extends radially from the central axis X. In an embodiment, the second end might be covered with a non-slip material, such as rubber, for example, to make it easier for an operator to hold the gripping portion.

To further facilitate placing the clamp 100 on the tyre P, the clamp 100 comprises a handgrip 50, connected to the clamp body 10 and positioned in a plane containing one of the arms 11, 12, 13 and the central axis X.

According to an aspect of this disclosure, the handgrip 50 is applied directly to one of the arms 11, 12, 13.

In a possible embodiment, the handgrip 50 is cantilevered to the end of the upper arm 11 so that it juts out from the upper arm 11 and can be easily gripped by an operator.

In use, therefore, when the clamp 100 needs to be applied to the tyre P, an operator grips the handgrip 50 and the gripping portion 81 to orient the clamp 100 so that the upper arm 11 is directed vertically relative to the ground (Figures 2A, 3).

Next, the operator moves the operating means in such a way as to move the sliders 21, 22, 23 away simultaneously towards the extracted position so as to occupy a position that is radially spaced from the central axis X by a distance greater than that between the axis of rotation of the tyre and the tyre tread B (Figure 2B).

Next, the clamp 100 is juxtaposed with the tyre P so that one of the sliders 21, 22, 23, preferably the upper slider 21, abuts an upper portion of the tyre tread B and so that the central axis X lies along the axis of rotation of the tyre P and the front abutment portion 21", 22", 23" of each slider 21, 22, 23 is in contact with the sidewall F of the tyre P.

In this situation, using the handgrip 50 to hold the clamp 100 in contact with the tyre P, the operator uses the gripping portion 81 to move the operating means 30 so the sliders 21, 22, 23 move to the retracted position.

The sliders 21, 22, 23 stop moving towards the retracted position when the side abutment portions 21', 22', 23' of the sliders 21, 22, 23 abut up against the tread B of the tyre P and apply pressure on it so as to securely tighten the clamp 100 around the tyre P.

To enable the sliders 21, 22, 23 to remain at the position reached to keep their hold on the tyre P by applying pressure on the tread B, the clamp 100 comprises a locking device 90.

More specifically, the locking device 90 is movable between a locked position, where it acts on the operating mechanism to prevent the sliders 21, 22, 23 from moving, and an unlocked position, where it allows the sliders 21, 22, 23 to move.

In other words, when the clamp 100 is applied to the tyre P and the sliders 21, 22, 23 are gripping the tyre tread B, the locking device 90 is configured to prevent the sliders 21, 22, 23 from unwantedly slipping towards the extracted position and thus from releasing the clamp 100 from the tyre P.

The locking device 90 thus prevents the sliders 21, 22, 23 from slackening their grip on the tyre P on account of an elastic return force applied by the tyre P itself on the sliders 21, 22, 23 themselves.

In a possible embodiment, shown in the accompanying drawings, the locking device 90 comprises a braking element 90a which, at the locked position, is configured to apply a locking pressure on the operating means by means of a vice.

The braking element 90a thus acts on the operating means like a disc brake, where the vice holds the operating means in place and stops it from unwantedly moving.

To switch the locking device 90 between the locked and the unlocked position, the clamp 100 comprises an actuating mechanism, operatively connected to the locking device 90 and operable by the user.

In a possible embodiment, the actuating mechanism includes a control means 91a, for example, a lever or a button or a movable knob, operable by the user with the hand that is holding the handgrip 50.

An example is shown in the accompanying drawings, where the braking element 90a is actuated by a lever positioned near the handgrip 50 and connected to the braking element 90a by a connecting cable.

In use, according to an aspect of the disclosure, the operator acts on the lever of the braking element 90a (for example, by pulling it towards the handgrip 50) using the hand that is holding the handgrip 50 itself, thus allowing the operating means to rotate and the sliders 21, 22, 23 to move.

In this situation, the braking element 90a is released and the sliders 21, 22, 23 are free to run along the arms 11, 12, 13. On the contrary, to prevent the operating means from rotating and the sliders 21, 22, 23 from moving, the operator releases the lever so that the braking element 90a can act on the operating means.

To facilitate adjustment of the clamp 100 on the wheel R, the clamp 100 comprises a rolling support system.

More specifically, the plurality of sliders 21, 22, 23 includes the rolling support system, which is configured to come into direct contact with the tyre P and which is rotatable idly about an axis of rotation.

According to an aspect of the disclosure, the rolling support system may comprise rolling elements located at different points of the clamp 100 and each rotating idly about its own axis.

In a preferred embodiment, each slider 21, 22, 23 has at least one rolling element configured to come into contact with the tyre P and to roll on it so that the clamp 100 can be positioned correctly relative to the wheel R.

More specifically, according to an aspect of this disclosure, the rolling support system includes at least a first rolling element forming part of the upper slider 21 and rotating idly about an axis parallel with the central axis X or with the upper axis S and at least a second rolling element forming part of at least one of the lateral sliders 22, 23 and rotating idly about an axis transverse to the lateral axis L1, L2 of the lateral arm 12, 13 of the at least one lateral slider 22, 23.

In this situation, the upper slider 21 and at least one of the two lateral sliders 22, 23 have at least one rolling element.

In the embodiment illustrated, the rolling support system includes, besides the first rolling element, a further rolling element on the upper slider 21. In this situation, the first rolling element and the further rolling element rotate idly about the axis parallel with the central axis X and with the upper axis S, respectively.

In the embodiment illustrated, the rolling support system also includes at least a second rolling element for each of the lateral sliders 22, 23. More specifically, each lateral slider 22, 23 comprises a plurality of rolling elements whose axes of rotation are parallel with each other and orthogonal to the lateral axis L1, L2 of the respective lateral arm 12, 13.

Advantageously, the fact that the rolling support system has at least one rolling element for each slider 21, 22, 23 allows the slider 21, 22, 23 associated with it, once the rolling element has been moved into contact with the tyre P to roll on the tyre so as to adjust the position of the clamp 100 without having to move it way from the wheel R repeatedly, as described below.

According to an aspect of this disclosure, the rolling support system comprises an adjustment tube 30 adapted to come into abutment against the tread B of the tyre P.

The adjustment tube 30 is rotatably associated with the side abutment portion 21' of the upper slider 21 to rotate about an upper axis of rotation Q parallel with the central axis.

As may be seen in the accompanying drawings, the side abutment portion 21' of the upper slider 21 is elongated along the upper axis of rotation Q and the tube 30 is rotatably fitted on the side abutment portion 21' so as to also extend along the upper axis of rotation Q.

According to an aspect of this disclosure, the adjustment tube 30 has rotational symmetry.

More specifically, the adjustment tube 30 is made in the form of a hollow cylinder so it can be rotatably engaged with the side abutment portion 21' of the upper slider 21.

The adjustment tube 30 also comprises an outside surface provided with a plurality of mutually spaced annular protrusions 31 coaxial with the upper axis of rotation Q.

In the preferred embodiment, the annular protrusions 31 define a saw-toothed profile whose tooth set is oriented towards the central axis X.

According to an aspect of this disclosure, the rolling support system comprises an adjustment roller 40 adapted to come into abutment against the sidewall F of the tyre P.

The adjustment roller 40 is rotatably coupled to the front adjustment portion 21" of the upper slider 21 to rotate idly about an axis of rotation parallel with the upper axis S.

In the preferred embodiment, the adjustment roller 40 has a substantially smooth outside surface which facilitates rolling on the sidewall F of the tyre P.

In another possible embodiment, the adjustment roller 40 might be made in the form of a spherical body capable of allowing the position of the clamp 100 to be adjusted in all directions.

In a possible embodiment of this disclosure, the rolling support system may also comprise, for each lateral slider 22, 23, one or more rolling elements 60 configured to abut the sidewall F of the tyre P.

The rolling elements 60 are mounted on the front abutment portion 22", 23" of the respective lateral slider 22, 23 and rotate about axes which are oriented transversely to the lateral axis L1, L2 of the respective lateral arm 12, 13.

In the preferred embodiment, each lateral slider 22, 23 comprises a plurality of rolling elements 60 that rotate idly about axes of rotation that are parallel with each other and perpendicular to the respective lateral axes L1, L2.

In the preferred embodiment, the rolling elements 60 have a dimension, measured along the respective lateral axes L1, L2, that is greater than the dimension measured transversely to these axes, that is to say, they are made in the form of discs.

In another possible embodiment, the rolling elements 60 might be made in the form of spherical bodies capable of allowing the position of the clamp 100 to be adjusted in all directions.

According to an aspect of this disclosure, the adjustment roller 40 and the rolling elements 60 are at the same maximum distance from the rear plane so that the clamp 100 moves correctly into abutment against the sidewall F of the tyre P. In the same way, the adjustment tube 30 and the knurling 70 of the lateral sliders 22, 23 are equidistant from the central axis X so as to facilitate centring the clamp 100.

The adjustment tube 30, the adjustment roller 40 and the rolling elements 60 act in conjunction in such a way that once the clamp 100 has been juxtaposed with the tyre P, its position relative to the wheel R can be corrected and adjusted without having to move the clamp 100 backwards and forwards repeatedly, as described in detail hereunder.

In use, with reference to the accompanying drawings, when the clamp 100 needs to be applied to the tyre P, an operator grips the handgrip 50 and the gripping portion 81 to orient the clamp 100 so that the upper arm 11 is directed vertically relative to the ground (Figure 2B)**.**

The sliders 21, 22, 23 are moved to the extracted position by means of the operating mechanism. Next, the clamp 100 is juxtaposed with the wheel R so that the upper slider 21 is positioned with its side abutment portion 21' abutting against a zone at the top of the tread B of the tyre P.

Looking in more detail, the clamp 100 is juxtaposed with the wheel R so that the adjustment tube 30 comes into abutment in proximity to the top of the tread B and the central axis X coincides with the axis of the wheel R.

Although the operator tries to position the clamp 100 as precisely as possible, it may nevertheless be misaligned relative to the wheel R, making it necessary to adjust the position of the clamp 100 before moving the sliders 21, 22, 23 to the retracted position.

In this situation, thanks to the strategic positioning of the rolling elements of the rolling support system on the sliders 21, 22, 23, the clamp 100 can be adjusted without moving it away from the wheel R.

Looking in more detail, when the clamp 100 is juxtaposed with the wheel R, it comes into contact with the tyre P with the front abutment portions 21", 22", 23" of each slider 21, 22, 23 and with the side abutment portion 21' of the upper slider 21. In this situation, the adjustment tube 30 and the adjustment roller 40 abut the tread B and the sidewall F of the tyre P, respectively, while the rolling elements 60 abut the sidewall F of the tyre P (Figure 3).

That way, if the position of the clamp 100 on the wheel R needs to be adjusted, the user can keep the upper slider 21 in contact with the tyre P and the front abutment portions 22", 23" of the lateral sliders 22, 23 in contact with the sidewall F of the tyre P and, by letting the adjustment tube 30, the adjustment roller 40 and rolling elements 60 roll, can suitably orient the clamp 100 to adjust its position relative to the wheel R.

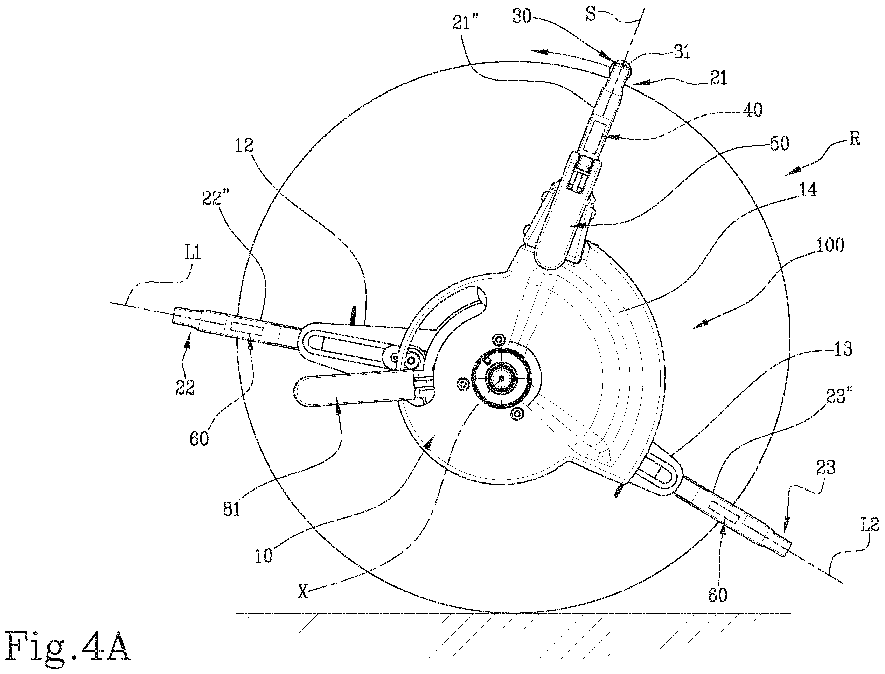

As shown, for example, in Figure 4A, if the clamp 100 has been juxtaposed with the wheel R so that the central axis X is aligned with the axis of the wheel R but the upper slider 21 is not aligned vertically with the centre of the wheel R (and the upper arm 11 is not perpendicular to the ground), the clamp 100 can easily be rotated about the central axis X by rolling the adjustment tube 30 along the top of the tread B.

Looking in more detail, while keeping the clamp 100 (that is to say, the front abutment portions 22", 23" of the lateral sliders 22, 23 and the upper slider 21) in contact with the tyre P, the user lets the adjustment tube roll 30 along the tyre tread B, specifically along the top portion of it, causing the clamp 100 to rotate about the central axis X. While the adjustment tube 30 rotates about the upper axis of rotation Q in contact with the tyre tread B, the adjustment roller 40 and the rolling elements 60 roll on the sidewall F of the tyre P to prevent the front abutment portions 21", 22", 23" of the sliders 21, 22, 23 from rubbing against the sidewall F of the tyre P and causing unwanted jamming and scraping.

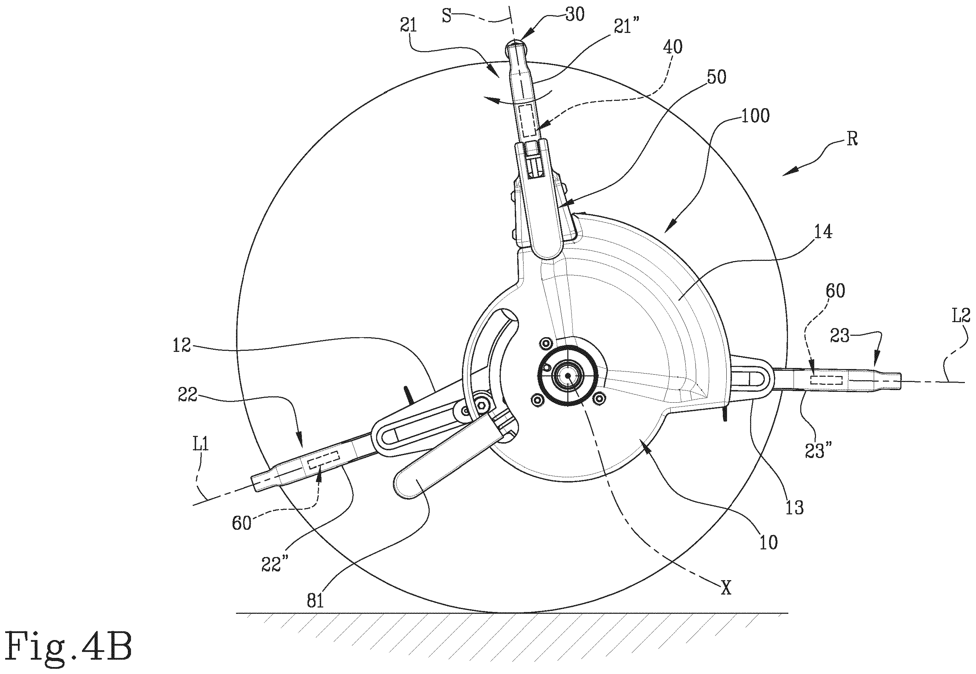

As shown in Figure 4B, on the other hand, if the clamp 100 has been juxtaposed with the wheel R so that the central axis X is not aligned with the axis of the wheel R but the upper slider 21 is substantially aligned vertically with the centre of the wheel R, the clamp 100 can be made to swivel about the adjustment tube 30 so as to align the central axis X with the axis of the wheel R.

In this situation, a useful feature is the fact that the adjustment tube 30 is rotatably connected to the side abutment portion 21' of the upper slider 21. More in detail, the user keeps the clamp 100 in contact with the tyre P and lets the clamp 100 swivel about the adjustment tube 30 so as to bring the central axis X into alignment with the axis of rotation of the wheel R.

During the swivelling motion of the clamp 100, the adjustment roller 40 and the rolling elements 60 roll on the sidewall F of the tyre P so that the clamp 100 can be positioned on the wheel R in such a way that its central axis X is aligned with the axis of rotation of the wheel R.

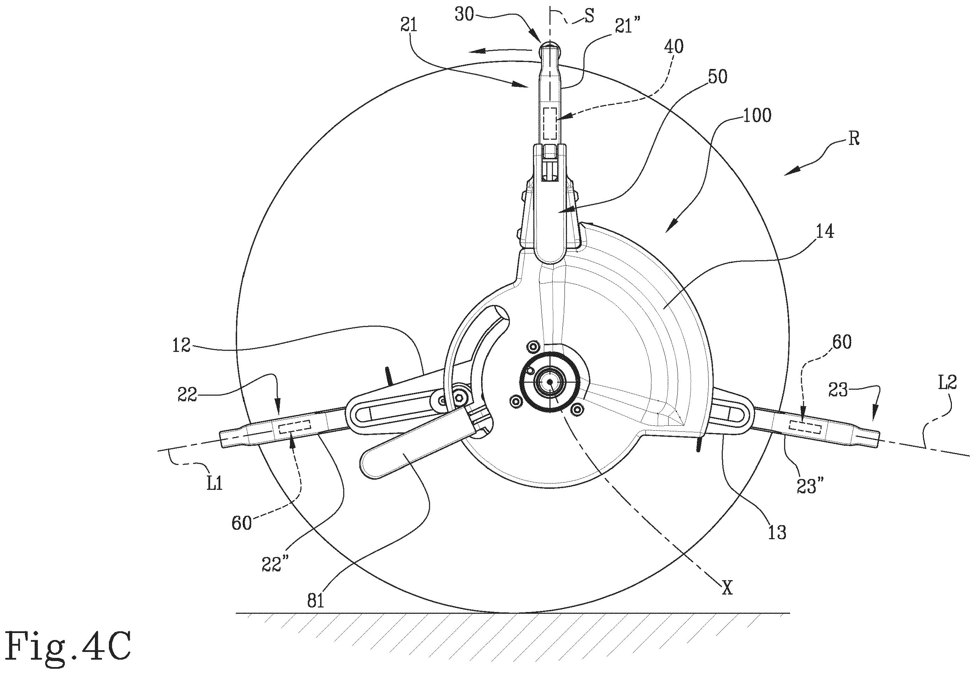

As shown in Figure 4C, on the other hand, if the wheel R the clamp 100 is applied to is particularly large in diameter, the clamp 100 may be juxtaposed with the wheel R in such a way that the central axis X is parallel with (and at the same height from the ground as) the axis of the wheel R and the upper arm 11 is perpendicular to the ground without the upper slider 21 being disposed on the top of the tread B (that is to say, without the upper slider 21 being vertically aligned with the centre of the wheel R). In this situation, if the sliders 21, 22, 23 were moved to the retracted position, the clamp 100 would (purely in terms of spatial orientation) be oriented correctly relative to the wheel R but "offset" relative to the centre of the wheel R.

To avoid this risk, by lifting the adjustment tube 30 slightly off the tyre tread B and keeping the adjustment roller 40 and the rolling elements 60 in contact with the sidewall F of the tyre P, the clamp 100 can be translated in such a way that the central axis X coincides with the axis of the wheel R and the upper slider 21 is on the top of the tyre tread B and vertically aligned with the centre of the wheel R.

Advantageously, providing a rolling element on each slider 21, 22, 23, specifically on each portion of the sliders 21, 22, 23 that comes into contact with the tyre P when the clamp 100 is juxtaposed with the wheel R, allows adjusting the position of the clamp 100 on the wheel R without having to move it away from the wheel but keeping at least one of the sliders 21, 22, 23 in contact with the tyre P to act as a guide.

Also an object of this invention is a method for applying a clamp 100 to a vehicle wheel.

The method comprises a step of preparing a clamp 100 comprising a body 10 including a plurality of arms 11, 12, 13 disposed radially around a central axis X.

In the preferred embodiment, the plurality of arms 11, 12, 13 comprises an upper arm 11 extending along an upper axis S that is oriented radially relative to the central axis X and a pair of lateral arms 12, 13 extending along respective lateral axes L1, L2 that are oriented radially relative to the central axis X.

In the preferred embodiment, each lateral axis L1, L2 is angularly spaced from the upper axis S by an angle greater than 90°.

The clamp 100 also comprises a plurality of sliders 21, 22, 23 slidably coupled to the arms 11, 12, 13 to move radially between a retracted position, where they are proximal to the central axis X, and an extracted position, where they are distal to the central axis X.

In the preferred embodiment, the plurality of sliders 21, 22, 23 comprises an upper slider 21 that is slidable along the upper arm 11 which is operatively configured to position the upper slider 21 in contact with the top of the tyre P.

In the preferred embodiment, the plurality of sliders 21, 22, 23 comprises, besides the upper slider 21, a pair of lateral sliders 22, 23 that are slidable along the respective lateral arms 12, 13 which are operatively configured to position the lateral sliders 22, 23 in contact with zones of the tyre P positioned at a height from the ground below the height occupied by the centre of the wheel R.

The clamp 100 also comprises an operating mechanism configured to allow simultaneously moving the sliders 21, 22, 23 from the retracted position to the extracted position and vice versa.

In other terms, the operating mechanism allows the sliders 21, 22, 23 to run along the arms 11, 12, 13 to occupy the same radial position relative to the central axis X, that is to say, so that the sliders 21, 22, 23 are equidistant from the central axis X.

In the preferred embodiment, the operating mechanism comprises an operating means that is rotatably connected to the body 10 to rotate about the central axis X and a plurality of levers, each having a first end that is articulated to the operating means, and a second end that is articulated to a corresponding slider 21, 22, 23 of the plurality of sliders to allow the sliders 21, 22, 23 to be moved simultaneously from the retracted position to the extracted position and vice versa.

More specifically, actuating the operating mechanism to move the sliders 21, 22, 23 towards the retracted position causes the lateral sliders 22, 23 to move towards the wheel R until stopping against the tread B of the tyre P.

The operating mechanism also comprises a gripping portion 81 grippable by a user and associated with the operating means to slidably move the sliders 21, 22, 23. The gripping portion 81 is connected to the operating means alternatively directly or indirectly, for example, by a kinematic coupling including gears or cables.

The clamp 100 also comprises a locking device 90 which is movable between a locked position, where it prevents the sliders 21, 22, 23 from moving, and an unlocked position, where it allows them to move.

In the embodiment illustrated, the locking device 90 comprises a braking element 90a configured to apply a locking pressure on the operating means to prevent it from rotating and thus preventing the slider 21, 22, 23 from moving.

The clamp 100 also comprises a rolling support system included in the plurality of sliders 21, 22, 23 and configured to come into direct contact with the tyre P.

In a possible embodiment, the rolling support system includes at least a first rolling element forming part of the upper slider 21 and rotating idly about an axis parallel with the central axis X or with the upper axis S and at least a second rolling element forming part of at least one of the lateral sliders 22, 23 and rotating idly about an axis transverse, preferably orthogonal, to the lateral axis L1, L2 of the lateral arm 12, 13 of the lateral slider 22, 23.

After the step of preparing, the method comprises a step of actuating the operating mechanism to move the sliders 21, 22, 23 simultaneously towards the extracted position. More specifically, during this step, an operator operatively holding the gripping portion 81, releases the locking device and moves the operating means which, thanks to the connecting levers, causes the sliders 21, 22, 23 to slide towards the extracted position.

In this situation, the sliders 21, 22, 23 are positioned on the respective arms 11, 12, 13 at a radial distance from the central axis X which is greater than the distance between the centre of the tyre P and its tread B. Next, the method comprises a step of juxtaposing the clamp 100 with the vehicle wheel R until the sliders 21, 22, 23 surround the tread B of the tyre P.

The clamp 100 is juxtaposed with the tyre P in such a way that the upper arm 11 is vertical to the ground. In this situation, the upper slider 21 is placed in proximity to the tread B of the wheel R in such a way that at least its side abutment portion 21' rests on the top thereof.

Looking in more detail, the clamp 100 is juxtaposed with the tyre P in such a way that each slider 21, 22, 23 rests its front abutment portion 21", 22", 23" against the sidewall F of the tyre P and the upper slider 21 also rests its side abutment portion 21' on the tread B of the tyre P. In this situation, the lateral sliders 22, 23 are equidistant from the central axis X and their side abutment portions 22', 23' are distal to the tread B.

Next, the method comprises a step of adjusting the position of the clamp 100 on the wheel R by rotating the clamp 100 so as to cause at least part of the rolling support to rotate.

In effect, the clamp 100 may in some cases be incorrectly positioned on the wheel R, that is to say, its central axis X might not be aligned with the wheel R and its upper arm 11 might not be perpendicular to the ground for the upper slider 21 to be vertically aligned with the centre of the wheel R.

In this situation, it is necessary to perform a step of adjusting the position of the clamp 100 on the wheel R.

More specifically, the position of the clamp 100 can be adjusted by keeping at least one part of the rolling support in contact with the tyre P of the wheel R so as to avoid having to move the clamp 100 backwards and forwards repeatedly relative to the wheel R.

According to an aspect of the disclosure, the rolling support system comprises at least one between an adjustment tube 30 and an adjustment roller 40.

In the preferred embodiment, the rolling support system comprises both the adjustment tube 30 and the adjustment roller 40.

More specifically, the adjustment tube 30 is rotatably coupled to the side abutment portion 21' of the upper slider 21 while the adjustment roller 40 is rotatably coupled to the front abutment portion 21" of the upper slider 21.

In the step of adjusting, the adjustment tube 30 abuts the top zone of the tyre P and rolls on the tread B of the tyre P, while the adjustment roller 40 abuts the sidewall F of the tyre P.

Looking in more detail, the step of adjusting comprises rotating the adjustment tube 30 and the adjustment roller 40 so as to cause the clamp 100 to rotate, swivel or translate relative to the wheel R.

A first type of adjustment might be necessary when the clamp 100 is juxtaposed with the wheel R in such a way that the central axis X is substantially coincident (aligned) with the axis of rotation of the wheel R but the upper slider 21 is not vertically aligned with the centre of the wheel R (that is to say, the upper arm 11 is not perpendicular to the ground), as shown in Figure 4A.

In this situation, while keeping the clamp 100 in contact with the tyre P, the user lets the adjustment tube roll 30 along the tyre tread B, specifically along the top portion of it, causing the clamp 100 to rotate about the central axis X. While the adjustment tube 30 rotates about the upper axis of rotation Q in contact with the tyre tread B, the adjustment roller 40 rolls on the sidewall F of the tyre P to prevent the front abutment portion 21" of the upper slider 21 from rubbing against the sidewall F of the tyre P and causing unwanted jamming and scraping.

A second type of adjustment might be necessary when the clamp 100 is juxtaposed with the wheel R in such a way that the upper slider 21 is substantially vertically aligned with the centre of the wheel R but the central axis X of the clamp 100 is not aligned with the axis of rotation of the wheel R, as shown, for example, in Figure 4B.

In this situation, a useful feature is the fact that the adjustment tube 30 is rotatably connected to the side abutment portion 21' of the upper slider 21. More in detail, the user keeps the clamp 100 in contact with the tyre P and lets the clamp 100 swivel about the adjustment tube 30 so as to bring the central axis X into alignment with the axis of rotation of the wheel R.

During the swivelling motion of the clamp 100, the adjustment roller 40 rolls on the sidewall F of the tyre P to allow correctly positioning the clamp 100.

The presence of the adjustment roller 40 might also be advantageous in the case where the user needs to move the clamp 100 in translation without rotating it in any way.

In effect, if the clamp 100 is juxtaposed with the tyre P with the upper arm 11 perpendicular to the ground, the upper slider 21 offset relative to the top of the tread B and the central axis parallel with the axis of the wheel R (Figure 4C), the clamp 100 can simply be translated relative to the tyre P, using the adjustment roller 40.

More specifically, by lifting the side abutment portion 21' a little and moving it away from the tread B, the clamp 100 can be made to move in translation while keeping the adjustment roller 40 in contact with the sidewall F of the tyre P so as to find the centred position where the central axis X of the clamp 100 is aligned or substantially aligned with the axis of the wheel R.

In the preferred embodiment, the rolling support system also comprises a plurality of rolling elements 60 rotatably coupled to the lateral sliders 22, 23.

The rolling elements 60 come into contact with the sidewall F of the tyre P during the step of juxtaposing the clamp 100 and run on the sidewall F during the step of adjusting so as to prevent the front abutment portions 22", 23" of the lateral sliders 22, 23 from rubbing against the sidewall F.

After the above mentioned steps of adjusting, the method comprises a step of actuating the operating mechanism to move the sliders 21, 22, 23 simultaneously towards the retracted position and a simultaneous step of rolling the rolling support system on an outside surface of the tyre P.

More specifically, as the lateral sliders 22, 23 move towards the tyre P with the upper slider 21 already in contact with the top zone of the tyre P, the rolling elements 60 roll along the sidewall F of the tyre P to make it easier for the lateral sliders 22, 23 to move in translation towards the central axis X.

In other words, even when the sliders 21, 22, 23 pass from the extracted position to the retracted position, the rolling elements 60 make it possible to prevent the lateral sliders 22, 23, specifically the front abutment portions 22", 23" thereof, from scraping or jamming when the clamp 100 is adjusted on the wheel R as described above and/or when the lateral sliders 22, 23 are moved to the retracted position.

This invention achieves the preset aims and overcomes the disadvantages of the prior art.

The clamp 100 is easy to apply to the wheel R and is easy to adjust.

To adjust it, the clamp 100 does not need to be repeatedly moved towards and away from the wheel R but can be kept in contact with the wheel R with at least part of the rolling support system.

The clamp 100 is easy to handle and reliable.

## Claims

1. A clamp (100) applicable to a tyre (P) of a vehicle wheel (R) and comprising:
- a body (10) including a plurality of arms (11, 12, 13) extending radially from a central axis (X) and angularly distributed around the central axis (X);
- a plurality of sliders (21, 22, 23), each slidably coupled to a respective arm (11, 12, 13) to move radially between a retracted position, where it is at a first distance from the central axis (X), and an extracted position, where it is at a second distance from the central axis (X), greater than the first distance, each slider (21, 22, 23) including a side abutment portion (21', 22', 23'), running parallel with the central axis (X) and configured to abut against a tread (B) of the tyre (P), and a front abutment portion (21", 22", 23"), running parallel with a respective arm (11, 12, 13) and configured to abut against a sidewall (F) of the tyre (P);
- an operating mechanism configured to allow simultaneously moving the sliders (21, 22, 23) from the retracted position to the extracted position and vice versa;
the clamp (100) being **characterized in that** the plurality of sliders (21, 22, 23) includes a rolling support system configured to come into rolling direct contact with the tyre (P) and rotatable idly about an axis of rotation such that once the clamp (100) has been juxtaposed with the tyre (P), its position relative to the wheel (R) can be adjusted by rolling movement of the rolling support system on an outside surface of the tyre (P).

2. The clamp according to claim 1, wherein the plurality of sliders (21, 22, 23) includes an upper slider (21) slidable along an upper arm (11) that is operatively configured to position the upper slider (21) in contact with a top of the tyre (P), and wherein the rolling support system comprises an adjustment tube (30) adapted to come into abutment against the tread (B) of the tyre (P), the adjustment tube (30) being rotatably associated with the side abutment portion (21') of the upper slider (21) to rotate about an upper axis of rotation (Q) parallel with the central axis (X).

3. The clamp according to claim 2, wherein the adjustment tube (30) has rotational symmetry and is provided with an outside surface having a plurality of mutually spaced annular protrusions (31) coaxial with the upper axis of rotation (Q).

4. The clamp according to claim 2 or 3, wherein either of the following conditions is met:
i) the front abutment portion (21") of the upper slider (21) is elongated along an upper axis (S), the upper axis (S) being oriented radially relative to the central axis (X), and wherein the rolling support system comprises an adjustment roller (40) adapted to come into abutment against the sidewall (F) of the tyre (P), the adjustment roller (40) being rotatably coupled to the front adjustment portion (21") of the upper slider (21) to rotate about an axis of rotation parallel with the upper axis (S);
ii) the clamp comprises a handgrip (50) connected to the upper arm (11) and positioned in a plane containing the central axis (X) and the upper arm (11).

5. The clamp according to any one of the preceding claims, wherein the plurality of sliders (21, 22, 23) includes an upper slider (21) disposed along an upper axis (S), and a pair of lateral sliders (22, 23) slidable along respective lateral arms (12, 13), each lateral arm (12, 13) being elongated along a respective lateral axis (L1, L2), each lateral axis (L1, L2) being oriented radially relative to the central axis (X) and spaced angularly by more than 90° from the upper axis (S), and wherein the rolling support system comprises, for each lateral slider (22, 23) of the pair of lateral sliders, one or more rolling elements (60) configured to come into contact with the sidewall (F) of the tyre (P), the one or more rolling elements (60) being mounted on the front abutment portion (22", 23") of the respective lateral slider (22, 23) and rotating about axes which are oriented transversely to the lateral axis (L1, L2) of the respective lateral arm (12, 13).

6. The clamp according to claim 5, wherein the lateral sliders (22, 23) are provided, on their respective side abutment portions (22', 23'), with knurling (70) that is configured to abut against the tread (B) of the tyre (P), the knurling (70) having a substantially saw-toothed profile whose tooth set is oriented towards the body (10).

7. The clamp according to any one of the preceding claims, wherein the plurality of sliders (21, 22, 23) includes:
- an upper slider (21) slidable along an upper arm (11) that is operatively configured to position the upper slider (21) in contact with a top of the tyre (P), wherein the front abutment portion (21") of the upper slider (21) is elongated along an upper axis (S), the upper axis (S) being oriented radially relative to the central axis (x);
- a pair of lateral sliders (22, 23) slidable along respective lateral arms (12, 13) which are operatively configured to position the lateral sliders (22, 23) in contact with zones of the tyre (P) positioned at a height lower than the axis of the wheel (R), each lateral arm (12, 13) being elongated along a respective lateral axis (L1, L2) that is oriented radially relative to the central axis (X),
wherein the clamp (100) comprises a handgrip (50) connected to the upper arm (11) and wherein the rolling support system includes:
- at least a first rolling element forming part of the upper slider (21) and rotating idly about an axis parallel with the central axis (X) or with the upper axis (S), and
- at least a second rolling element forming part of at least one of the lateral sliders (22, 23) and rotating idly about an axis transverse to the lateral axis (L1, L2) of the lateral arm (12, 13) of the at least one lateral slider (22, 23).

8. The clamp according to any one of the preceding claims, wherein the operating mechanism comprises:
- an operating means that is rotatably connected to the body (10) to rotate about the central axis (X);
- a plurality of connecting levers, each connecting lever having a first end that is articulated to the operating means, and a second end that is articulated to a corresponding slider (21, 22, 23) of the plurality of sliders to allow the sliders (21, 22, 23) to be moved simultaneously from the retracted position to the extracted position and vice versa;
- a gripping portion (81) grippable by a user and associated with the operating means to slidably move the sliders (21, 22, 23), wherein the gripping portion (81) is connected to the operating means, alternatively
i) directly;
ii) indirectly by a kinematic coupling including gears or cables.

9. The clamp according to any one of the preceding claims, comprising a locking device (90) movable between a locked position, where it acts on the operating mechanism to prevent the sliders (21, 22, 23) from moving, and an unlocked position, where it allows the sliders (21, 22, 23) to move.

10. A method for applying a clamp (100) to a vehicle wheel (R), the method comprising the following steps:
- preparing a clamp (100) comprising:
a body (10) including a plurality of arms (11, 12, 13) disposed radially around a central axis (X);
a plurality of sliders (21, 22, 23) slidably coupled to the arms to move radially between a retracted position, where they are proximal to the central axis (X), and an extracted position, where they are distal to the central axis (X);
an operating mechanism configured to allow simultaneously moving the sliders (21, 22, 23) from the retracted position to the extracted position and vice versa;
a rolling support system included in the plurality of sliders (21, 22, 23) and configured to come into rolling direct contact with the tyre (P);
- actuating the operating mechanism to move the sliders (21, 22, 23) simultaneously towards the extracted position;
- juxtaposing the clamp (100) with the vehicle wheel (R) until the sliders (21, 22, 23) surround the tread (B) of the tyre (P);
- actuating the operating mechanism to move the sliders (21, 22, 23) simultaneously towards the retracted position and simultaneously rolling the rolling support system on an outside surface of the tyre (P), such that once the clamp (100) has been juxtaposed with the tyre (P), its position relative to the wheel (R) can be adjusted by rolling movement of the rolling support system on the outside surface of the tyre (P).

11. The method according to claim 10,
wherein the clamp (100), with the sliders (21, 22, 23) at the extracted position, is positioned in such a way that an upper slider (21), forming part of the plurality of sliders (21, 22, 23) is positioned with a side abutment portion (21') of it abutting against a zone at the top of the tread (B) of the tyre (P),
the method further comprising a step of adjusting the position of the clamp (100) on the wheel (R) by rotating the clamp (100), wherein rotating the clamp (100) causes at least part of the rolling support to rotate.

12. The method according to claim 11, wherein the rolling support system comprises at least one of the following features:
i) an adjustment tube (30) rotatably coupled to a lateral abutment portion (21') of the upper slider (21), wherein, in the step of adjusting, the adjustment tube (30) abuts the top zone of the tyre (P) and rolls on the tread (B) of the tyre (P) to facilitate rotation of the clamp (100) about the central axis (X);
ii) an adjustment roller (40) rotatably coupled to a front abutment portion (21') of the upper slider (21), wherein, in the step of adjusting, the adjustment roller (40) abuts the top zone of the tyre (P) on the sidewall (F) of the tyre (P) and rolls around an axis of rotation parallel with the upper arm (11) along the sidewall (F) of the tyre (P) to facilitate rotation of the clamp (100) about the central axis (X).

13. The method according to claim 11 or 12, wherein the plurality of sliders (21, 22, 23) includes, besides the upper slider (21), a pair of lateral sliders (22, 23) that are angularly spaced around the central axis (X) relative to the upper slider (21) so that when the upper slider (21) is abutted against the top zone of the tread (B) of the tyre (P), the lateral sliders (22, 23) are angularly spaced from the upper slider (21) by more than ninety degrees and move towards the wheel (R) until they come into abutment against the tread (B) of the tyre (P) under the action of the operating mechanism to move the sliders (21, 22, 23) towards the retracted position.

14. The method according to claim 13, wherein the rolling support system comprises a plurality of rolling elements (60) rotatably coupled to the lateral sliders (22, 23), and wherein, as the lateral sliders (22, 23) move towards the tyre (P) with the upper slider (21) already in contact with the top zone of the tyre (P), the rolling elements (60) roll along the sidewall (F) of the tyre (P) to make it easier for the lateral sliders (22, 23) to move in translation towards the central axis (X).

## Patentansprüche

1. Klemme (100), anbringbar an einem Reifen (P) eines Fahrzeugrads (R) und umfassend:
- einen Körper (10), einschließend eine Vielzahl von Armen (11, 12, 13), die sich radial von einer zentralen Achse (X) erstrecken und winkelig um die zentrale Achse (X) verteilt sind;
- eine Vielzahl von Schiebern (21, 22, 23), von denen ein jeder verschiebbar mit einem jeweiligen Arm (11, 12, 13) gekoppelt ist, um sich radial zwischen einer eingefahrenen Position, in der er sich in einem ersten Abstand von der zentralen Achse (X) befindet, und einer ausgefahrenen Position, in der er sich in einem zweiten Abstand von der zentralen Achse (X) befindet, der größer als der erste Abstand ist, zu bewegen, wobei ein jeder Schieber (21, 22, 23) einen Seitenanschlagsabschnitt (21', 22', 23') einschließt, der parallel zur zentralen Achse (X) verläuft und ausgelegt ist, um an einer Lauffläche (B) des Reifens (P) anzuschlagen, und einen Vorderanschlagsabschnitt (21", 22", 23"), der parallel zu einem jeweiligen Arm (11, 12, 13) verläuft und ausgelegt ist, um an einer Seitenwand (F) des Reifens (P) anzuschlagen;
- einen Betriebsmechanismus, der ausgelegt ist, um zu erlauben, dass die Schieber (21, 22, 23) simultan von der eingefahrenen Position in die ausgefahrene Position und umgekehrt bewegt werden;
wobei die Klemme (100) **dadurch gekennzeichnet ist, dass** die Vielzahl von Schiebern (21, 22, 23) ein Wälzlagersystem einschließt, das ausgelegt ist, um mit dem Reifen (P) in direkten Wälzkontakt zu kommen, und das freilaufend um eine Rotationsachse drehbar ist, sodass die Position der Klemme (100), sobald sie neben dem Reifen (P) platziert ist, relativ zum Reifen (R) durch eine Wälzbewegung des Wälzlagersystems auf einer außenseitigen Oberfläche des Reifens (P) justiert werden kann.

2. Klemme nach Anspruch 1, wobei die Vielzahl von Schiebern (21, 22, 23) einen oberen Schieber (21) einschließt, der entlang eines oberen Arms (11) verschiebbar ist, der betriebswirksam ausgelegt ist, um den oberen Schieber (21) in Kontakt mit einer Oberseite des Reifens (P) zu positionieren, und wobei das Wälzlagersystem ein Justierrohr (30) umfasst, das dazu eingerichtet ist, an der Lauffläche (B) des Reifens (P) in Anschlag zu kommen, wobei das Justierrohr (30) drehbar mit dem Seitenanschlagsabschnitt (21') des oberen Schiebers (21) assoziiert ist, um sich um eine obere Rotationsachse (Q) parallel zur zentralen Achse (X) zu drehen.

3. Klemme nach Anspruch 2, wobei das Justierrohr (30) eine rotatorische Symmetrie aufweist und mit einer außenseitigen Oberfläche versehen ist, aufweisend eine Vielzahl von gegenseitig beabstandeten ringförmigen Vorsprüngen (31), die koaxial zur oberen Rotationsachse (Q) angeordnet sind.

4. Klemme nach Anspruch 2 oder 3, wobei eine der folgenden Bedingungen erfüllt ist:
i) der Vorderanschlagsabschnitt (21") des oberen Schiebers (21) ist entlang einer oberen Achse (S) langgestreckt, die obere Achse (S) ist radial relativ zur zentralen Achse (X) ausgerichtet, und wobei das Wälzlagersystem eine Justierwalze (40) umfasst, die dazu eingerichtet ist, an der Seitenwand (F) des Reifens (P) in Anschlag zu kommen, wobei die Justierwalze (40) drehbar mit dem Vorderjustierabschnitt (21") des oberen Schiebers (21) gekoppelt ist, um sich um eine Rotationsachse parallel zur oberen Achse (S) zu drehen;
ii) die Klemme umfasst einen Handgriff (50), der mit dem oberen Arm (11) verbunden und in einer Ebene positioniert ist, die die zentrale Achse (X) und den oberen Arm (11) enthält.

5. Klemme nach einem der vorhergehenden Ansprüche, wobei die Vielzahl von Schiebern (21, 22, 23) einen oberen Schieber (21) einschließt, der entlang einer oberen Achse (S) angeordnet ist, und ein Paar von Seitenschiebern (22, 23), die entlang jeweiliger Seitenarme (12, 13) verschiebbar sind, wobei ein jeder Seitenarm (12, 13) entlang einer jeweiligen Seitenachse (L1, L2) langgestreckt ist, jede Seitenachse (L1, L2) radial relativ zur zentralen Achse (X) ausgerichtet und winkelig um mehr als 90° von der oberen Achse (S) beabstandet ist, und wobei das Wälzlagersystem für jeden Seitenschieber (22, 23) des Paars von Seitenschiebern ein oder mehrere Wälzelemente (60) umfasst, die ausgelegt sind, um mit der Seitenwand (F) des Reifens (P) in Kontakt zu kommen, wobei das eine oder die mehreren Wälzelemente (60) auf dem Vorderanschlagsabschnitt (22", 23") des jeweiligen Seitenschiebers (22, 23) montiert sind und sich um Achsen drehen, die quer zur Seitenachse (L1, L2) des jeweiligen Seitenarms (12, 13) ausgerichtet sind.

6. Klemme nach Anspruch 5, wobei die Seitenschieber (22, 23) auf ihren jeweiligen Seitenanschlagsabschnitten (22', 23') mit einer Rändelung (70) versehen sind, die ausgelegt ist, um an der Lauffläche (B) des Reifens (P) anzuschlagen, wobei die Rändelung (70) im Wesentlichen ein Sägezahnprofil aufweist, dessen Zahnsatz hinführend zum Körper (10) ausgerichtet ist.

7. Klemme nach einem der vorhergehenden Ansprüche, wobei die Vielzahl von Schiebern (21, 22, 23) Folgendes einschließt:
- einen oberen Schieber (21), der entlang eines oberen Arms (11) verschiebbar ist, der betriebswirksam ausgelegt ist, um den oberen Schieber (21) in Kontakt mit einer Oberseite des Reifens (P) zu positionieren, wobei der Vorderanschlagsabschnitt (21") des oberen Schiebers (21) entlang einer oberen Achse (S) langgestreckt ist und die obere Achse (S) radial relativ zur zentralen Achse (x) ausgerichtet ist;
- ein Paar von Seitenschiebern (22, 23), die entlang jeweiliger Seitenarme (12, 13) verschiebbar sind, die betriebswirksam ausgelegt sind, um die Seitenschieber (22, 23) in Kontakt mit Zonen des Reifens (P) zu positionieren, die an einer Höhe positioniert sind, die niedriger als die Achse des Rads (R) ist, wobei ein jeder Seitenarm (12, 13) entlang einer jeweiligen Seitenachse (L1, L2) langgestreckt ist, die radial relativ zur zentralen Achse (X) ausgerichtet ist,
wobei die Klemme (100) einen Handgriff (50) umfasst, der mit dem oberen Arm (11) verbunden ist, und wobei das Wälzlagersystem Folgendes einschließt:
- mindestens ein erstes Wälzelement, der einen Teil des oberen Schiebers (21) bildet und sich freilaufend um eine Achse dreht, die parallel zur zentralen Achse (X) oder zur oberen Achse (S) verläuft, und
- mindestens ein zweites Wälzelement, der einen Teil von mindestens einem der Seitenschieber (22, 23) bildet und sich freilaufend um eine Achse dreht, die quer zur Seitenachse (L1, L2) des Seitenarms (12, 13) von mindestens einem Seitenschieber (22, 23) angeordnet ist.

8. Klemme nach einem der vorhergehenden Ansprüche, wobei der Betriebsmechanismus Folgendes umfasst:
- Betriebsmittel, die drehbar mit dem Körper (10) verbunden sind, um sich um die zentrale Achse (X) zu drehen;
- eine Vielzahl von Verbindungshebeln, wobei ein jeder Verbindungshebel ein erstes Ende aufweist, das an den Betriebsmitteln angelenkt ist, und ein zweites Ende, das an einem entsprechenden Schieber (21, 22, 23) der Vielzahl von Schiebern angelenkt ist, um zu erlauben, dass die Schieber (21, 22, 23) simultan von der eingefahrenen Position in die ausgefahrene Position und umgekehrt bewegt werden;
- einen Greifabschnitt (81), der von einem Nutzer greifbar und mit den Betriebsmitteln assoziiert ist, um die Schieber (21, 22, 23) verschiebbar zu bewegen, wobei der Greifabschnitt (81) mit den Betriebsmitteln verbunden ist, und zwar wahlweise
i) direkt;
ii) indirekt durch eine kinematische Kupplung, einschließend Zahnräder oder Seile.

9. Klemme nach einem der vorhergehenden Ansprüche, umfassend eine Sperrvorrichtung (90), die zwischen einer gesperrten Position, in der sie auf den Betriebsmechanismus wirkt, um zu verhindern, dass sich die Schieber (21, 22, 23) bewegen, und einer entsperrten Position, in der sie erlaubt, dass die Schieber (21, 22, 23) sich bewegen, bewegbar ist.

10. Verfahren zum Anbringen einer Klemme (100) an einem Fahrzeugrad (R), wobei das Verfahren die folgenden Schritte umfasst:
- Vorbereiten einer Klemme (100), umfassend:
einen Körper (10), einschließend eine Vielzahl von Armen (11, 12, 13), die radial rund um eine zentrale Achse (X) angeordnet sind;
eine Vielzahl von Schiebern (21, 22, 23), die verschiebbar mit den Armen gekoppelt sind, um sich radial zwischen einer eingefahrenen Position, in der sie sich in der Nähe der zentralen Achse (X) befinden, und einer ausgefahrenen Position, in der sie von der zentralen Achse (X) entfernt sind, zu bewegen;
einen Betriebsmechanismus, der ausgelegt ist, um zu erlauben, dass die Schieber (21, 22, 23) simultan von der eingefahrenen Position in die ausgefahrene Position und umgekehrt bewegt werden;
ein Wälzlagersystem, das in der Vielzahl von Schiebern (21, 22, 23) eingeschlossen und ausgelegt ist, um in direkten Wälzkontakt mit dem Reifen (P) zu kommen;
- Betätigen des Betriebsmechanismus, um die Schieber (21, 22, 23) simultan hinführend zur ausgefahrenen Position zu bewegen;
- Platzieren der Klemme (100) neben dem Fahrzeugrad (R), bis die Schieber (21, 22, 23) die Lauffläche (B) des Reifens (P) umgeben;
- Betätigen des Betriebsmechanismus, um die Schieber (21, 22, 23) simultan hinführend zur eingefahrenen Position zu bewegen und simultan das Wälzlagersystem auf einer außenseitigen Oberfläche des Reifens (P) zu rollen, sodass die Position der Klemme (100), nachdem diese neben dem Reifen (P) platziert wurde, durch die Wälzbewegung des Wälzlagersystems auf der außenseitigen Oberfläche des Reifens (P) relativ zum Rad (R) justiert werden kann.

11. Verfahren nach Anspruch 10, wobei die Klemme (100) mit den Schiebern (21, 22, 23) an der ausgefahrenen Position so positioniert ist, dass ein oberer Schieber (21), der einen Teil der Vielzahl von Schiebern (21, 22, 23) bildet, so positioniert ist, dass ein Seitenanschlagsabschnitt (21') von diesem an einer Zone an der Oberseite der Lauffläche (B) des Reifens (P) anschlägt,
wobei das Verfahren zudem einen Schritt zum Justieren der Position der Klemme (100) auf dem Rad (R) durch Drehen der Klemme (100) umfasst, wobei das Drehen der Klemme (100) bewirkt, dass sich mindestens ein Teil des Wälzlagers dreht.

12. Verfahren nach Anspruch 11, wobei das Wälzlagersystem mindestens eins der folgenden Merkmale umfasst:
i) ein Justierrohr (30), das drehbar mit einem Seitenanschlagsabschnitt (21') des oberen Schiebers (21) gekoppelt ist, wobei das Justierrohr (30) im Schritt zum Justieren an der oberseitigen Zone des Reifens (P) anschlägt und auf der Lauffläche (B) des Reifens (P) rollt, um die Drehung der Klemme (100) um die zentrale Achse (X) zu erleichtern;
ii) eine Justierwalze (40), die drehbar mit einem Vorderanschlagsabschnitt (21') des oberen Schiebers (21) gekoppelt ist, wobei die Justierwalze (40) im Schritt zum Justieren an der oberseitigen Zone des Reifens (P) auf der Seitenwand (F) des Reifens (P) anschlägt und rund um eine Rotationsachse parallel zum oberen Arm (11) entlang der Seitenwand (F) des Reifens (P) rollt, um die Drehung der Klemme (100) um die zentrale Achse (X) zu erleichtern.

13. Verfahren nach Anspruch 11 oder 12, wobei die Vielzahl von Schiebern (21, 22, 23) abgesehen vom oberen Schieber (21) ein Paar von Seitenschiebern (22, 23) einschließt, die winkelig rund um die zentrale Achse (X) relativ zum oberen Schieber (21) beabstandet sind, sodass die Seitenschieber (22, 23), wenn der obere Schieber (21) an der oberseitigen Zone der Lauffläche (B) des Reifens (P) anschlägt, winkelig vom oberen Schieber (21) um mehr als neunzig Grad beabstandet sind und sich hinführend zum Rad (R) bewegen, bis sie unter der Wirkung des Betriebsmechanismus an der Lauffläche (B) des Reifens (P) in Anschlag kommen, um die Schieber (21, 22, 23) hinführend zur eingefahrenen Position zu bewegen.

14. Verfahren nach Anspruch 13, wobei das Wälzlagersystem eine Vielzahl von Wälzelementen (60) umfasst, die drehbar mit den Seitenschiebern (22, 23) gekoppelt sind, und wobei die Wälzelemente (60), wenn sich die Seitenschieber (22, 23) hinführend zum Reifen (P) bewegen und der obere Schieber (21) bereits mit der oberseitigen Zone des Reifens (P) in Kontakt ist, entlang der Seitenwand (F) des Reifens (P) rollen, um die translatorische Bewegung der Seitenschieber (22, 23) hinführend zur zentralen Achse (X) zu erleichtern.

## Revendications

1. Dispositif de serrage (100) applicable à un pneumatique (P) de roue (R) de véhicule et comprenant :
- un corps (10) incluant une pluralité de bras (11, 12, 13) s'étendant radialement à partir d'un axe central (X) et répartis angulairement autour de l'axe central (X) ;
- une pluralité de glissières (21, 22, 23), chacune étant couplée de manière coulissante à un bras (11, 12, 13) respectif pour se déplacer radialement entre une position rétractée, où elle se trouve à une première distance de l'axe central (X), et une position extraite, où elle se trouve à une deuxième distance de l'axe central (X), supérieure à la première distance, chaque glissière (21, 22, 23) comprenant une portion de butée latérale (21', 22', 23'), s'étendant parallèlement à l'axe central (X) et configurée pour venir en butée contre une bande de roulement (B) du pneumatique (P), et une portion de butée frontale (21", 22", 23"), s'étendant parallèlement à un bras (11, 12, 13) respectif et configurée pour venir en butée contre un flanc (F) du pneumatique (P) ;
- un mécanisme de fonctionnement configuré pour permettre le déplacement simultané des glissières (21, 22, 23) de la position rétractée à la position extraite et vice versa ;
le dispositif de serrage (100) étant **caractérisé en ce que** la pluralité de glissières (21, 22, 23) inclut un système de support de roulement configuré pour venir en contact direct de roulement avec le pneumatique (P) et pouvant tourner à vide autour d'un axe de rotation de sorte qu'une fois que le dispositif de serrage (100) a été juxtaposé avec le pneumatique (P), sa position par rapport à la roue (R) peut être ajustée par un mouvement de roulement du système de support de roulement sur une surface extérieure du pneumatique (P).

2. Dispositif de serrage selon la revendication 1, dans lequel la pluralité de glissières (21, 22, 23) inclut une glissière supérieure (21) pouvant coulisser le long d'un bras supérieur (11) qui est configuré fonctionnellement pour positionner la glissière supérieure (21) en contact avec un sommet du pneumatique (P), et dans lequel le système de support de roulement comprend un tube de réglage (30) adapté pour venir en butée contre la bande de roulement (B) du pneumatique (P), le tube de réglage (30) étant associé de manière rotative à la portion de butée latérale (21') de la glissière supérieure (21) pour tourner autour d'un axe de rotation supérieur (Q) parallèle à l'axe central (X).

3. Dispositif de serrage selon la revendication 2, dans lequel le tube de réglage (30) a une symétrie de rotation et est pourvu d'une surface extérieure ayant une pluralité de saillies annulaires (31) mutuellement espacées coaxiales avec l'axe de rotation supérieur (Q).

4. Dispositif de serrage selon la revendication 2 ou 3, dans lequel l'une des conditions suivantes est remplie :
i) la portion de butée frontale (21") de la glissière supérieure (21) est allongée le long d'un axe supérieur (S), l'axe supérieur (S) étant orienté radialement par rapport à l'axe central (X), et dans lequel le système de support de roulement comprend un rouleau de réglage (40) adapté pour venir en butée contre le flanc (F) du pneumatique (P), le rouleau de réglage (40) étant couplé de manière rotative à la portion de butée frontale (21") de la glissière supérieure (21) pour tourner autour d'un axe de rotation parallèle à l'axe supérieur (S) ;
ii) le dispositif de serrage comprend une poignée (50) reliée au bras supérieur (11) et positionnée dans un plan contenant l'axe central (X) et le bras supérieur (11).

5. Dispositif de serrage selon l'une quelconque des revendications précédentes, dans lequel la pluralité de glissières (21, 22, 23) inclut une glissière supérieure (21) disposée le long d'un axe supérieur (S), et une paire de glissières latérales (22, 23) pouvant coulisser le long de bras latéraux (12, 13) respectifs, chaque bras latéral (12, 13) étant allongé le long d'un axe latéral (L1, L2) respectif, chaque axe latéral (L1, L2) étant orienté radialement par rapport à l'axe central (X) et espacé angulairement de plus de 90° de l'axe supérieur (S), et dans lequel le système de support de roulement comprend, pour chaque glissière latérale (22, 23) de la paire de glissières latérales, un ou plusieurs éléments de roulement (60) configurés pour venir en contact avec le flanc (F) du pneumatique (P), l'un ou plusieurs éléments de roulement (60) étant montés sur la portion de butée frontale (22", 23") de la glissière latérale (22, 23) respective et tournant autour d'axes qui sont orientés transversalement à l'axe latéral (L1, L2) du bras latéral (12, 13) respectif.

6. Dispositif de serrage selon la revendication 5, dans lequel les glissières latérales (22, 23) sont pourvues, sur leurs portions de butée latérales (22', 23') respectives, d'un moletage (70) qui est configuré pour venir en butée contre la bande de roulement (B) du pneumatique (P), le moletage (70) ayant un profil sensiblement en dents de scie dont le jeu de dents est orienté vers le corps (10).

7. Dispositif de serrage selon l'une quelconque des revendications précédentes, dans lequel la pluralité de glissières (21, 22, 23) inclut :
- une glissière supérieure (21) pouvant coulisser le long d'un bras supérieur (11) qui est fonctionnellement configuré pour positionner la glissière supérieure (21) en contact avec un sommet du pneumatique (P), dans lequel la portion de butée frontale (21") de la glissière supérieure (21) est allongée le long d'un axe supérieur (S), l'axe supérieur (S) étant orienté radialement par rapport à l'axe central (x) ;
- une paire de glissières latérales (22, 23) pouvant coulisser le long de bras latéraux (12, 13) respectifs qui sont configurés fonctionnellement pour positionner les glissières latérales (22, 23) en contact avec des zones du pneumatique (P) positionnées à une hauteur inférieure à l'axe de la roue (R), chaque bras latéral (12, 13) étant allongé le long d'un axe latéral (L1, L2) respectif qui est orienté radialement par rapport à l'axe central (X),
dans lequel le dispositif de serrage (100) comprend une poignée (50) reliée au bras supérieur (11) et dans lequel le système de support de roulement inclut :
- au moins un premier élément de roulement faisant partie de la glissière supérieure (21) et tournant à vide autour d'un axe parallèle à l'axe central (X) ou à l'axe supérieur (S), et
- au moins un second élément de roulement faisant partie d'au moins une des glissières latérales (22, 23) et tournant à vide autour d'un axe transversal à l'axe latéral (L1, L2) du bras latéral (12, 13) de l'au moins une glissière latérale (22, 23).

8. Dispositif de serrage selon l'une quelconque des revendications précédentes, dans lequel le mécanisme de fonctionnement comprend :
- un moyen de fonctionnement qui est relié de manière rotative au corps (10) pour tourner autour de l'axe central (X) ;
- une pluralité de leviers de liaison, chaque levier de liaison ayant une première extrémité qui est articulée aux moyens de fonctionnement, et une seconde extrémité qui est articulée à une glissière (21, 22, 23) correspondante de la pluralité de glissières pour permettre aux glissières (21, 22, 23) d'être déplacées simultanément de la position rétractée à la position extraite et vice versa ;
- une portion de préhension (81) pouvant être saisie par un utilisateur et associée aux moyens de fonctionnement pour déplacer de manière coulissante les glissières (21, 22, 23), dans lequel la portion de préhension (81) est reliée aux moyens de fonctionnement, alternativement
i) directement ;
ii) indirectement par un accouplement cinématique incluant des engrenages ou des câbles.

9. Dispositif de serrage selon l'une quelconque des revendications précédentes, comprenant un dispositif de verrouillage (90) mobile entre une position verrouillée, dans lequel il agit sur le mécanisme de fonctionnement pour empêcher les glissières (21, 22, 23) de se déplacer, et une position déverrouillée, dans laquelle il permet aux glissières (21, 22, 23) de se déplacer.

10. Procédé d'application d'un dispositif de serrage (100) à une roue (R) de véhicule, le procédé comprenant les étapes suivantes :
- préparer un dispositif de serrage (100), comprenant :
un corps (10) incluant une pluralité de bras (11, 12, 13) disposés radialement autour d'un axe central (X) ;
une pluralité de glissières (21, 22, 23) accouplées de manière coulissante aux bras pour se déplacer radialement entre une position rétractée, dans laquelle ils sont proximaux à l'axe central (X), et une position extraite, dans laquelle ils sont distaux à l'axe central (X) ;
un mécanisme de fonctionnement configuré pour permettre le déplacement simultané des glissières (21, 22, 23) de la position rétractée à la position extraite et vice versa ;
un système de support de roulement inclus dans la pluralité de glissières (21, 22, 23) et configuré pour entrer en contact direct de roulement avec le pneumatique (P) ;
- actionner le mécanisme de fonctionnement pour déplacer les glissières (21, 22, 23) simultanément vers la position extraite ;
- juxtaposer le dispositif de serrage (100) avec la roue (R) du véhicule jusqu'à ce que les glissières (21, 22, 23) entourent la bande de roulement (B) du pneumatique (P) ;
- actionner le mécanisme de fonctionnement pour déplacer les glissières (21, 22, 23) simultanément vers la position rétractée et simultanément faire rouler le système de support de roulement sur une surface extérieure du pneumatique (P), de sorte qu'une fois que le dispositif de serrage (100) a été juxtaposé au pneumatique (P), sa position par rapport à la roue (R) peut être ajustée par le mouvement de roulement du système de support de roulement sur la surface extérieure du pneumatique (P).

11. Procédé selon la revendication 10, dans lequel le dispositif de serrage (100), avec les glissières (21, 22, 23) dans la position extraite, est positionné de telle sorte qu'une glissière supérieure (21), faisant partie de la pluralité de glissières (21, 22, 23), est positionnée avec une portion de butée latérale (21') de celle-ci en butée contre une zone au sommet de la bande de roulement (B) du pneumatique (P),
le procédé comprenant en outre une étape d'ajuster la position du dispositif de serrage (100) sur la roue (R) en faisant tourner le dispositif de serrage (100), dans lequel la rotation du dispositif de serrage (100) provoque la rotation d'au moins une partie du support de roulement.

12. Procédé selon la revendication 11, dans lequel le système de support de roulement comprend au moins l'une des caractéristiques suivantes :
i) un tube de réglage (30) accouplé de manière rotative à une portion de butée latérale (21') de la glissière supérieure (21), dans lequel, dans l'étape de régler, le tube de réglage (30) bute contre la zone supérieure du pneumatique (P) et roule sur la bande de roulement (B) du pneumatique (P) pour faciliter la rotation du dispositif de serrage (100) autour de l'axe central (X) ;
ii) un rouleau de réglage (40) couplé de manière rotative à une portion de butée frontale (21') de la glissière supérieure (21), dans lequel, dans l'étape de régler, le rouleau de réglage (40) bute contre la zone supérieure du pneumatique (P) sur le flanc (F) du pneumatique (P) et roule autour d'un axe de rotation parallèle au bras supérieur (11) le long du flanc (F) du pneumatique (P) pour faciliter la rotation du dispositif de serrage (100) autour de l'axe central (X).

13. Procédé selon la revendication 11 ou 12, dans lequel la pluralité de glissières (21, 22, 23) inclut, outre la glissière supérieure (21), une paire de glissières latérales (22, 23) qui sont espacées angulairement autour de l'axe central (X) par rapport à la glissière supérieure (21) de sorte que lorsque la glissière supérieure (21) est en butée contre la zone supérieure de la bande de roulement (B) du pneumatique (P), les glissières latérales (22, 23) sont espacées angulairement de la glissière supérieure (21) de plus de quatre-vingt-dix degrés et se déplacent vers la roue (R) jusqu'à ce qu'elles viennent en butée contre la bande de roulement (B) du pneumatique (P) sous l'action du mécanisme de fonctionnement pour déplacer les glissières (21, 22, 23) vers la position rétractée.

14. Procédé selon la revendication 13, dans lequel le système de support de roulement comprend une pluralité d'éléments de roulement (60) accouplés de manière rotative aux glissières latérales (22, 23), et dans lequel, lorsque les glissières latérales (22, 23) se déplacent vers le pneumatique (P) avec la glissière supérieure (21) déjà en contact avec la zone supérieure du pneumatique (P), les éléments de roulement (60) roulent le long du flanc (F) du pneumatique (P) pour faciliter le déplacement en translation des glissières latérales (22, 23) vers l'axe central (X).
